# FASCICULE DE BREVET EUROPEEN

(11) **EP 4 004 420 B1**
(45) Date de publication et mention de la délivrance du brevet: **10.05.2023**
(21) Numéro de dépôt: 20746615.2
(22) Date de dépôt: 24.07.2020
(51) Int. Cl.: F16L 37/23

(54) **ÉLÉMENT MÂLE DE RACCORD FLUIDIQUE, RACCORD FLUIDIQUE COMPRENANT UN TEL ÉLÉMENT MÂLE ET PROCÉDÉ D'ASSEMBLAGE D'UN TEL ÉLÉMENT MÂLE**
STECKELEMENT FÜR EINE FLUIDISCHE KUPPLUNG, FLUIDISCHE KUPPLUNG MIT EINEM SOLCHEN STECKELEMENT UND VERFAHREN ZUM ZUSAMMENBAU EINES SOLCHEN STECKELEMENTS
MALE ELEMENT FOR A FLUIDIC COUPLING, FLUIDIC COUPLING COMPRISING SUCH A MALE ELEMENT, AND METHOD FOR ASSEMBLING SUCH A MALE ELEMENT

(30) Priorité: 26.07.2019 FR 1908526
(43) Date de publication de la demande: 01.06.2022
(73) Titulaire: Staubli Faverges, 74210 Faverges-Seythenex (FR)
(72) Inventeur: TIBERGHIEN, Alain-Christophe, 74230 SEVRIER (FR); DURIEUX, Christophe, 73200 GILLY SUR ISERE (FR); MOREL, Frédéric, 74210 LATHUILE (FR)
(74) Mandataire: Lavoix
(86) Numéro de dépôt international: PCT/EP2020/070926
(87) Numéro de publication internationale: WO 2021/018759

(56) Documents cités:
- CN-B- 103 939 695
- CN-U- 208 138 665
- GB-A- 2 445 701

## Description

La présente invention concerne à un élément mâle de raccord fluidique permettant de constituer, avec un élément femelle, un raccord fluidique permettant la jonction amovible de canalisations.

L'invention s'intéresse plus particulièrement aux raccords rapides présentant un verrouillage automatique lors de l'accouplement entre l'élément mâle et l'élément femelle du raccord.

Il est connu de CN-U-208138665 de proposer un raccord dit « rapide », qui comprend un élément de raccord mâle et un élément de raccord femelle. L'élément mâle est constitué d'un corps qui comporte une extension cylindrique tubulaire s'étendant le long de l'axe d'emmanchement et formant un passage intérieur pour le fluide. L'élément mâle comporte également une couronne solidaire du corps qui s'étend le long de l'axe d'emmanchement, et entoure l'extension cylindrique tubulaire. Cette couronne définit un espace annulaire entre l'extension cylindrique tubulaire et sa surface interne. Des logements radiaux, qui reçoivent des billes de verrouillage mobiles radialement, sont ménagés par perçage dans la couronne. Une déformation plastique du matériau est ensuite réalisée aux extrémités interne et externe de chaque logement radial pour former des resserrements locaux du logement radial. L'élément femelle du raccord comporte un corps tubulaire qui s'étend le long de l'axe d'emmanchement et forme un passage intérieur de fluide. Ce corps tubulaire est pourvu d'une extrémité distale qui pénètre dans l'espace annulaire entre l'extension cylindrique tubulaire et la surface intérieure de la couronne pendant la connexion et présente une rainure annulaire externe pour recevoir les billes de verrouillage. Les logements radiaux contenant les billes de verrouillage sont resserrés aux extrémités intérieure et extérieure pour former des butées, de sorte que les billes de verrouillage sont mobiles radialement mais maintenues à l'intérieur des logements radiaux.

L'espace annulaire et les logements radiaux sont obtenus par usinage. Les fluides de refroidissement contiennent des agents agressifs qui imposent, pour la réalisation des éléments de raccord, l'emploi de matériaux inoxydables particulièrement durs et peu ductiles. Ces matériaux génèrent des efforts d'usinage importants lors de la fabrication de ces éléments de raccord, qui rendent les usinages imprécis.

C'est à ces problèmes qu'entend plus particulièrement remédier l'invention, en proposant un élément mâle de raccord fluidique dont la couronne et les logements radiaux recevant des billes de verrouillage sont aisés à fabriquer.

À cet effet, l'invention concerne un élément mâle de raccord fluidique destiné à être accouplé avec un élément femelle. L'élément mâle comprend un corps creux, qui s'étend suivant un axe longitudinal et qui comporte une extension cylindrique distale. L'élément mâle comporte aussi une couronne axialement solidaire du corps, la couronne entourant l'extension cylindrique et présentant une face interne et une face externe, la face interne de la couronne définissant avec l'extension cylindrique un espace annulaire. Des logements radiaux sont ménagés dans la couronne. L'élément mâle comprend, en outre, des billes de verrouillage, qui sont logées dans les logements radiaux et qui sont mobiles radialement entre une position intérieure dans laquelle les billes émergent partiellement de la face interne de la couronne et une position extérieure dans laquelle les billes n'émergent pas de la face interne de la couronne, les billes étant retenues radialement au sein de leur logement radial respectif par des resserrements constitués de saillies internes et externes, ménagées respectivement à la jonction de chaque logement radial et des faces interne et externe de la couronne. Selon l'invention, la couronne est formée par l'assemblage d'une première partie et d'une deuxième partie, les première et deuxième parties étant solidaires l'une de l'autre selon l'axe longitudinal, La première partie est axialement solidaire d'une surface d'appui distale orthogonale à l'axe longitudinal, tandis que la deuxième partie est annulaire et comporte une surface d'appui proximale, les surfaces d'appui proximale et distale étant en contact longitudinal l'une avec l'autre. Des rainures longitudinales sont ménagées dans l'une des première ou deuxième parties de la couronne, les rainures longitudinales présentant chacune une première paroi et débouchant axialement sur une surface d'embouchure de cette partie de la couronne, la surface d'embouchure étant au moins partiellement en regard d'une surface de l'autre des première ou deuxième parties de la couronne selon l'axe longitudinal, tandis que l'autre des première ou deuxième partie de la couronne présente des deuxièmes parois en regard de chaque rainure longitudinale selon l'axe longitudinal. Chaque logement radial est délimité par la première paroi de la rainure longitudinale et la deuxième paroi en regard. Au moins une des première ou deuxième parois présente la saillie externe ou au moins une des saillies externes située à la jonction des parois de chaque logement radial avec la face externe de la couronne, tandis que au moins une des première ou deuxième parois présente la saillie interne ou au moins une des saillies internes située à la jonction des parois de chaque logement radial avec la face interne de la couronne. Les saillies interne et externe s'étendent à l'intérieur de chaque logement radial et forment les resserrements de retenue radiale des billes de verrouillage dans le logement radial.

Grâce à l'invention, la couronne comprenant les logements radiaux est réalisée en deux parties, qui sont faciles à usiner séparément l'une de l'autre, l'intérieur des logements radiaux étant directement accessibles, ce qui facilite en particulier la fabrication des resserrements des logements radiaux. Grâce à l'invention, les logements radiaux peuvent être usinés de diverses façons, en fonction des matériaux du raccord et/ou de l'outillage disponible.

Selon des aspects avantageux mais non obligatoires de l'invention, un tel élément mâle peut incorporer une ou plusieurs des caractéristiques suivantes, prises selon toute combinaison techniquement admissible :
- Les rainures longitudinales sont ménagées dans la deuxième partie.
- Chaque deuxième paroi est disposée dans une zone longitudinale intermédiaire de la rainure longitudinale.
- Les rainures longitudinales sont ménagées dans l'une des première ou deuxième parties, la surface d'appui proximale ou distale de l'autre des première ou deuxième parties formant la deuxième paroi de chaque logement radial.
- La première partie est monobloc avec l'extension cylindrique.
- Les saillies internes et externes sont ménagées dans une partie seulement parmi la première partie et la deuxième partie.
- Les saillies internes et externes sont disposées à la jonction de la première paroi avec les faces interne et externe de la couronne.
- La deuxième partie comprend une jupe de guidage, qui coopère radialement avec la première partie pour assurer le centrage radial de la deuxième partie par rapport à la première partie.
- La jupe de guidage comprend la surface d'appui proximale, qui est ménagée sur une extrémité arrière de la jupe de guidage.
- la surface d'embouchure est la surface d'appui de celle des première ou deuxième parties comprenant les rainures longitudinales.
- Les rainures longitudinales sont des lumières oblongues ménagées dans la deuxième partie et qui comprennent une portion distale et une portion proximale, alors que la portion proximale de chaque rainure longitudinale présente, au niveau de sa jonction avec la surface radiale externe de la deuxième partie et/ou au niveau de sa jonction avec la surface radiale interne de la deuxième partie, un diamètre supérieur au diamètre des billes de verrouillage et que les saillies internes et externes sont formées sur la portion distale de chaque rainure longitudinale.
- La deuxième partie comprend une paroi qui s'étend axialement vers l'arrière à partir de la surface d'appui proximale, la paroi étant apte à être déformée plastiquement sur un épaulement de la première partie de manière à solidariser axialement la première partie et la deuxième partie.
- La première partie et la deuxième partie sont solidarisées par soudage, de préférence par soudage laser.
- Chaque rainure longitudinale est délimitée selon l'axe longitudinal par un fond formé d'une portion de cylindre définissant un diamètre interne, alors que pour chaque logement radial, la distance axiale entre la deuxième paroi et le fond de chaque rainure longitudinale est égale au diamètre interne de la portion de cylindre du fond.

L'invention concerne également un raccord fluidique qui comprend un élément mâle tel que mentionné ci-dessus et un élément femelle, aptes à être emmanchés l'un avec l'autre selon la direction longitudinale, l'élément femelle comprenant une extrémité distale, dans laquelle est ménagée une gorge annulaire externe, et une bague de verrouillage qui présente une face de verrouillage, la bague de verrouillage étant apte à passer d'une position de verrouillage, dans laquelle la face de verrouillage est alignée radialement avec la gorge annulaire externe et maintient les billes de verrouillage en position intérieure, et une position de déverrouillage, dans laquelle la face de verrouillage est décalée de la gorge annulaire externe selon l'axe longitudinal, chaque bille étant libre de se déplacer en position extérieure au sein du logement radial, en configuration accouplée de l'élément mâle avec l'élément femelle, l'extrémité distale étant logée dans l'espace annulaire de l'élément mâle et les billes de verrouillage étant reçues dans la gorge annulaire externe.

Ce raccord présente les mêmes avantages que l'élément mâle de l'invention.

L'invention concerne également un procédé d'assemblage d'un élément mâle de raccord fluidique tel que décrit précédemment, le procédé d'assemblage comprenant au moins des étapes successives consistant à :
a) introduire les billes de verrouillage dans les rainures longitudinales ménagées dans l'une des première ou deuxième parties de la couronne,
b) engager la première partie avec la deuxième partie de la couronne, avec une deuxième paroi en regard de chaque rainure longitudinale selon l'axe longitudinal, alors que les saillies interne et externe sont déjà présentes,
c) mettre en contact la surface d'appui distale contre la surface d'appui proximale selon l'axe longitudinal,
d) Solidariser axialement l'une à l'autre les première et deuxième parties de la couronne.

Grâce au procédé de l'invention, l'assemblage de l'élément mâle est aisé et compatible avec divers matériaux.

Avantageusement, à l'étape d), les première et deuxième parties sont solidarisées l'une à l'autre par soudage, de préférence par soudage laser, ou collage.

L'invention sera mieux comprise et d'autres avantages de celle-ci apparaîtront plus clairement à la lumière de la description qui va suivre de six modes de réalisation d'un élément mâle, d'un raccord fluidique rapide et d'un procédé d'assemblage conformes à son principe, donnée uniquement à titre d'exemple et faite en référence aux dessins, dans lesquels :
[Fig 1] la figure 1 est une coupe d'un raccord rapide conforme à l'invention, comprenant un élément mâle conforme à un premier mode de réalisation l'invention et un élément femelle, le raccord rapide étant dans une configuration accouplée ;
[Fig 2] la figure 2 est une vue en perspective éclatée de certains composants de l'élément mâle du raccord de la figure 1 ;
[Fig 3] la figure 3 est une coupe de l'élément mâle de la figure 2, suivant le plan de coupe III de la figure 2 ;
[Fig 4] la figure 4 est une coupe à plus grande échelle d'un détail de l'élément mâle de la figure 2, suivant un plan de couple IV de la figure 2 ;
[Fig 5] la figure 5 est une vue en perspective éclatée de certains composants d'un élément mâle de raccord conforme à un deuxième mode de réalisation de l'invention, ces composants étant les mêmes que ceux représentés à la figure 2 pour le premier mode de réalisation ;
[Fig 6] la figure 6 est une coupe d'un détail de l'élément mâle de la figure 5 suivant un plan VI de la figure 5 ;
[Fig 7] la figure 7 est une vue en perspective éclatée de certains composants d'un élément mâle de raccord conforme à un troisième mode de réalisation de l'invention, ces composants étant les mêmes que ceux représentés à la figure 2 pour le premier mode de réalisation ;
[Fig 8] la figure 8 est une coupe d'un détail de l'élément mâle de la figure 7 suivant le plan de coupe VIII de la figure 7 ;
[Fig 9] la figure 9 est une coupe analogue à la figure 8 d'un élément mâle conforme à une variante du troisième mode de réalisation, certains éléments ayant été omis pour faciliter la lecture ;
[Fig 10] la figure 10 est une vue en perspective d'une pièce d'un élément mâle de raccord conforme à un quatrième mode de réalisation de l'invention ;
[Fig 11] la figure 11 est une coupe d'un élément mâle de raccord conforme au quatrième mode de réalisation et comprenant la pièce de la figure 10, le plan de cette coupe étant analogue à celui de la figure 3 ;
[Fig 12] la figure 12 est une vue en perspective d'une pièce d'un élément mâle de raccord conforme à un cinquième mode de réalisation de l'invention ;
[Fig 13] la figure 13 est une vue en coupe d'un élément mâle de raccord conforme au cinquième mode de réalisation et comprenant la pièce de la figure 12, illustrant une étape du procédé d'assemblage conforme à l'invention, le plan de cette coupe étant analogue à celui de la figure 3 ;
[Fig 14] la figure 14 est une coupe de l'élément mâle de raccord de la figure 13 suivant un autre plan de coupe, illustrant une autre étape du procédé d'assemblage de l'élément mâle, postérieure à l'étape illustrée en figure 13, le plan de cette coupe étant analogue à celui de la figure 4 ;
[Fig 15] la figure 15 est une vue d'un détail de l'élément mâle de raccord des figures 13 et 14 ;
[Fig 16] la figure 16 est une vue en perspective d'une pièce d'un élément mâle de raccord conforme à un sixième mode de réalisation de l'invention ;
[Fig 17] la figure 17 est une vue en coupe d'un élément mâle de raccord conforme au sixième mode de réalisation et comprenant la pièce de la figure 16, illustrant une étape du procédé d'assemblage conforme à l'invention, le plan de cette coupe étant analogue à celui de la figure 13 ; et
[Fig 18] la figure 18 est une vue en perspective partiellement éclatée de l'élément mâle de la figure 17.

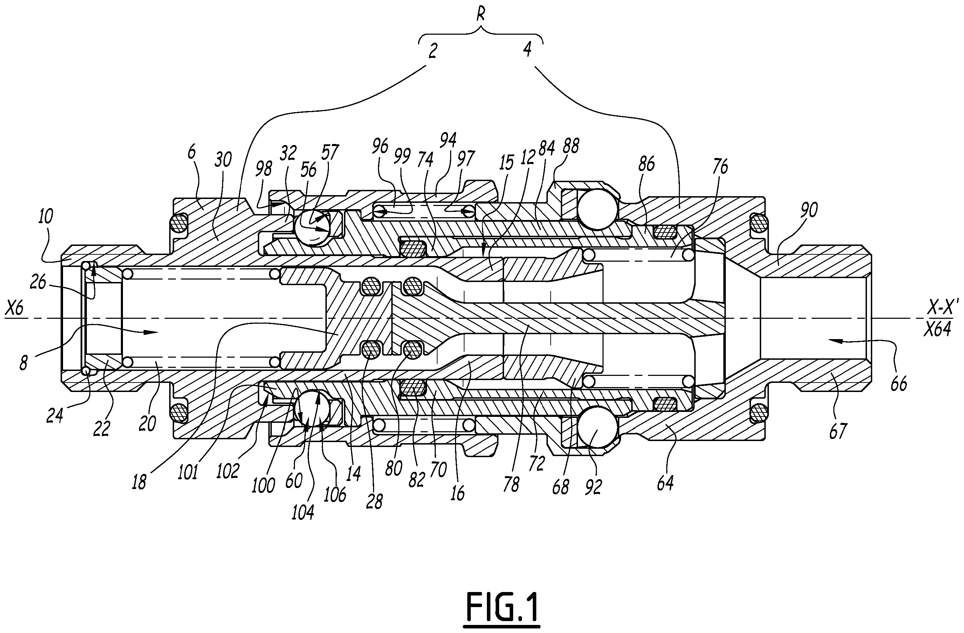

La figure 1 représente un raccord R de type fluidique.

Le raccord R comprend un élément mâle 2 conforme à un premier mode de réalisation de l'invention et un élément femelle 4. L'élément mâle 2 est complémentaire de l'élément femelle 4. Dans la configuration de la figure 1, l'élément mâle 2 et l'élément femelle 4 sont connectés l'un à l'autre, c'est-à-dire que l'élément mâle 2 est emmanché dans l'élément femelle 4, et le raccord R définit un axe longitudinal d'emmanchement X-X'.

À cet égard, on définit une direction longitudinale ou axiale d'un élément du raccord comme s'étendant suivant l'axe central longitudinal de l'élément considéré, c'est-à-dire horizontale sur la figure 1. On définit une direction radiale à un axe comme étant orthogonale à cet axe, un plan radial à un axe comme étant un plan contenant cet axe et s'étendant dans une direction radiale, un plan orthoradial à un axe est un plan orthogonal à un plan radial à cet axe et ne coupant pas cet axe, et une direction orthoradiale à un axe est une direction orthogonale à un plan radial à cet axe et ne coupant pas cet axe. On définit une direction orthoradiale à un axe comme étant orientée selon une direction correspondant à une rotation autour de cet axe. Pour chaque élément considéré, le terme « interne » signifie « tourné vers l'axe central longitudinal », alors que le terme « externe » signifie « tourné dans la direction opposée à l'axe central longitudinal ».

Pour plus de clarté, on définit aussi le côté avant ou distal d'un élément mâle, respectivement d'un élément femelle, comme le côté de cet élément mâle, respectivement de cet élément femelle, orienté dans la direction longitudinale dans le sens de l'emmanchement ou de l'accouplement, c'est-à-dire orienté vers l'élément femelle, respectivement vers l'élément mâle, au début de l'emmanchement. Le côté avant de l'élément mâle 2 est orienté vers la droite de la figure 1, tandis que le côté avant de l'élément femelle 4 est orienté vers la gauche de la figure 1. À l'inverse, on définit le côté arrière ou proximal d'un élément mâle, respectivement d'un élément femelle, comme la direction longitudinale opposée à l'élément femelle, respectivement à l'élément mâle.

Dans ce qui suit, on considère qu'une pièce est solidaire d'une autre pièce selon une direction donnée lorsque les deux pièces n'ont pas de possibilité de mouvement relatif selon cette direction.

L'élément mâle 2 comprend un corps 6. Le corps 6 de l'élément mâle 2 est ici réalisé en métal. Plusieurs types de métal peuvent être utilisés suivant les applications, le fluide transporté et la pression d'utilisation. À titre d'exemple non limitatif, lorsque le fluide, tel qu'un fluide de refroidissement, traversant le raccord R présente un caractère corrosif, le corps 6 peut être réalisé en acier inoxydable. Dans d'autres applications, le corps 6 peut être réalisé partiellement ou totalement en laiton. Le corps 6 peut être fabriqué par usinage, notamment par tournage.

Le corps 6 est creux, s'étend suivant un axe longitudinal X6 et présente un passage intérieur 8 traversant. L'axe longitudinal X6 est confondu avec l'axe d'emmanchement X-X' du raccord R lorsque les éléments mâle 2 et femelle 4 sont emmanchés. Le corps 6 présente une extrémité proximale 10 et une extrémité distale 12.

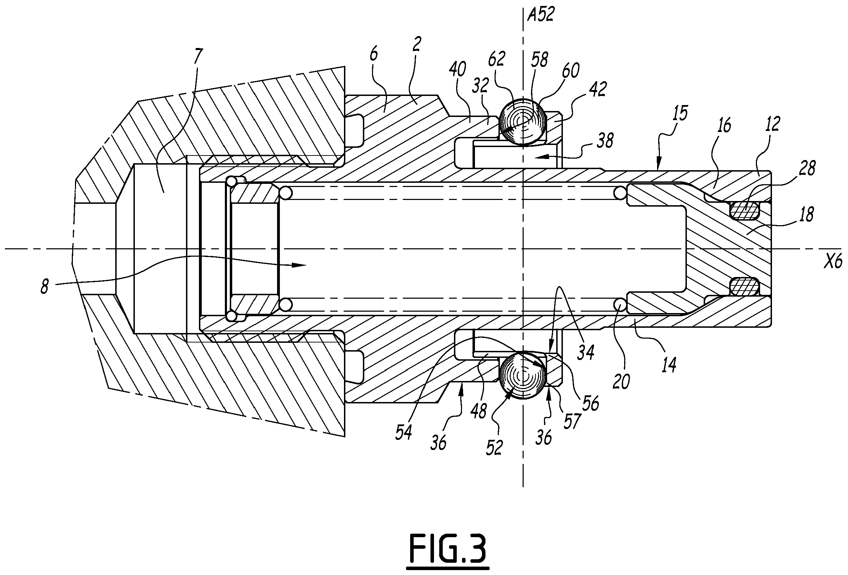

Du côté de l'extrémité proximale 10, l'extérieur du corps 6 est fileté de façon à pouvoir être assemblé à une canalisation 7, représentée uniquement sur la figure 3. Du côté de l'extrémité distale 12, le passage intérieur 8 est logé dans une extension cylindrique 14 distale du corps 6. L'extension cylindrique 14 est à section circulaire et présente une surface radiale externe 15 et un renflement intérieur distal 16, qui forme une butée pour une soupape 18 mobile à l'intérieur du passage intérieur 8. La soupape 18 est repoussée vers l'avant du corps 6 par un ressort hélicoïdal 20. Le ressort 20 est en appui du côté proximal sur une bague d'arrêt 22, la bague d'arrêt 22 étant arrêtée par un jonc élastique 24 logé dans une rainure 26 du passage intérieur 8.

Le corps 6 comprend aussi une collerette externe 30, qui s'étend à partir du reste du corps 6 radialement à l'axe longitudinal X6, en s'éloignant de celui-ci. Dans l'exemple des figures, la collerette externe 30 comporte six pans droits, qui facilitent le montage de l'élément mâle 2 sur la canalisation 7 au moyen d'une clef. Du côté distal, la collerette externe 30 est prolongée par une couronne 32 cylindrique à section circulaire, centrée sur l'axe longitudinal X6. La couronne 32 entoure l'extension cylindrique 14 et présente une face interne 34, orientée vers l'axe longitudinal X6, et une face externe 36, orientée à l'opposé de la surface interne 34. La face avant de la couronne est en retrait vers l'arrière de l'élément mâle 2 par rapport au renflement intérieur distal 16. La couronne 32 définit avec l'extension cylindrique 14 un espace annulaire 38, ménagé radialement entre la surface radiale externe 15 de l'extension cylindrique 14 et la face interne 34.

La couronne 32 comprend une première partie 40, solidaire axialement de la collerette externe 30, et une deuxième partie 42. La première partie 40 et la deuxième partie 42 sont deux pièces distinctes qui sont assemblées pour former la couronne 32, ainsi que cela ressort de la description qui suit. La première partie 40 prend la forme d'un cylindre creux, centré sur l'axe longitudinal X6, qui est lié par une extrémité arrière à la collerette externe 30 et qui présente, à l'extrémité opposée, une surface distale 44. La surface distale 44 est orthogonale à l'axe longitudinal X6. La première partie 40 présente un diamètre interne D40.

La deuxième partie 42 présente ici une forme de bague annulaire, centrée sur l'axe longitudinal X6. La deuxième partie 42 présente, du côté proximal, une surface proximale 46. Les surfaces proximale 46 et distale 44 sont en regard l'une de l'autre selon l'axe longitudinal X6, la surface proximale 46 étant parallèle à la surface distale 44 de la première partie 40 de la couronne 32 en configuration assemblée des première et deuxième parties 40 et 42. Dans le premier mode, les surfaces distale 44 et proximale 46 sont en contact longitudinal l'une avec l'autre. La surface distale 44 est donc une surface d'appui distale, tandis que la surface proximale 46 est une surface d'appui proximale.

La deuxième partie 42 comprend également une jupe 48, qui est une paroi cylindrique à section circulaire centrée sur l'axe longitudinal X6 et qui s'étend à partir de la surface proximale 46 vers l'arrière, parallèlement à l'axe longitudinal X6. La jupe 48 présente une surface externe 50 avec un diamètre externe D50. La jupe 48 coopère radialement avec la première partie 40 pour assurer le centrage radial de la deuxième partie 42 par rapport à la première partie 40. La jupe 48 est donc une jupe de guidage. Dans le premier mode de réalisation, la jupe 48 s'étend axialement au sein de l'espace annulaire 38 au contact d'une surface radiale interne 35 de la première partie 40. Autrement dit, le diamètre externe D50 est égal, au jeu d'assemblage près, au diamètre interne D40. La jupe 48 est configurée pour assurer le centrage de la deuxième partie 42 par rapport à la première partie 40 de la couronne 32 radialement à l'axe longitudinal X6, tandis que les surfaces distale 44 et proximale 46, en appui l'une sur l'autre, assurent le positionnement longitudinal de la deuxième partie 42 par rapport à la première partie 40, par rapport à l'axe longitudinal X6.

On comprend que la première partie 40 est solidaire du corps 6, tandis que la deuxième partie 42 est rapportée sur le corps 6, la couronne 32 étant formée de la réunion de la première partie 40 et de la deuxième partie 42. La première partie 40 et le corps 6 sont axialement solidaires. Dans l'exemple des figures, la première partie 40 et le corps 6 constituent une pièce monobloc. En particulier, la première partie 40 est monobloc avec l'extension cylindrique 14. Selon une variante non représentée, la première partie 40 est rapportée sur le corps 6, par exemple par vissage.

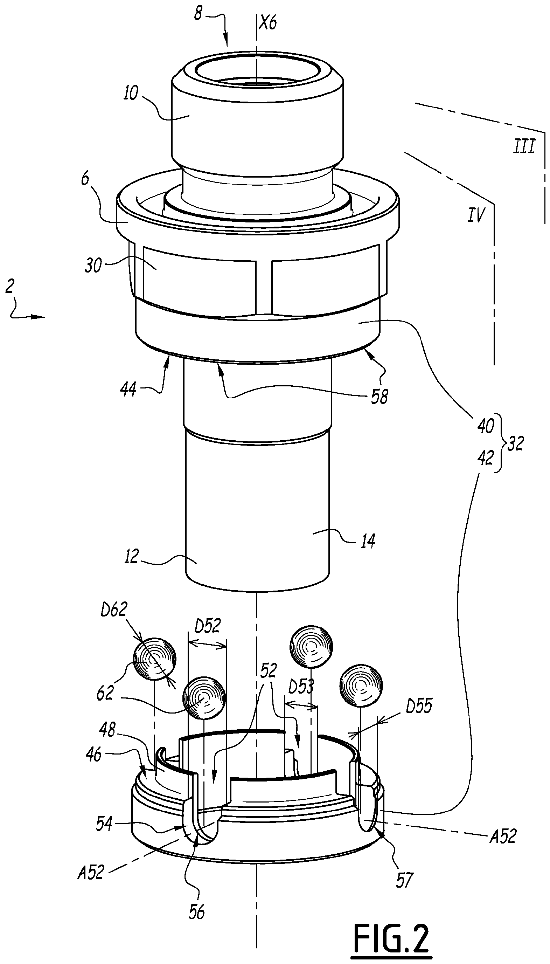

La deuxième partie 42 comprend, en outre, des rainures 52 qui sont longitudinales, en ce sens que leur plus grande dimension s'entend parallèlement à l'axe X6. Dans le premier mode de réalisation présenté sur les figures 1 à 4, les rainures longitudinales 52 sont des encoches, au nombre de quatre, qui sont régulièrement réparties autour de l'axe longitudinal X6 à la périphérie de la deuxième partie 42 et qui présentent chacune une première paroi 54 interne en forme de U. Les rainures longitudinales 52 s'étendent axialement depuis la surface proximale 46 vers l'avant de la deuxième partie 42, tandis que le fond du U est disposé à l'avant de la surface proximale 46. Le fond du U comprend une portion de cylindre d'axe A52 radial à l'axe longitudinal X6 et qui présente un diamètre interne D52. Les rainures longitudinales 52 débouchent axialement sur la surface proximale 46 vers l'arrière. En d'autres termes, il existe une intersection entre la première paroi 54 et la surface proximale 46. Cette intersection est transversale à l'axe longitudinal X6. La surface proximale 46 est donc aussi une surface d'embouchure de la deuxième partie 42 avec rainures longitudinales 52. Comme cela est visible sur la figure 2, la surface proximale 46 est formée de la réunion de plusieurs portions de surface réparties autour de l'axe longitudinal X6 et délimitées par les rainures 52. Cette surface proximale 46 est en regard d'une surface de la première partie 40 selon l'axe longitudinal X6. En d'autres termes, la surface proximale 46 et la première partie 40 sont tournées l'une vers l'autre et alignées le long d'un axe parallèle à l'axe longitudinal X6. Dans l'exemple illustré, la surface proximale 46 est en regard de la surface distale 44, selon l'axe longitudinal X6.

Au niveau de la jonction entre chaque première paroi 54 et les faces interne 34 et externe 36 de la deuxième partie 42, chacune des rainures longitudinales 52 présente une saillie interne 56 et une saillie externe 57, ou rebords interne et externe, qui s'étendent chacune à l'intérieur de chaque rainure longitudinale 52, sans dépasser de la face interne 34, respectivement externe 36. Pour chaque rainure longitudinale 52, les saillies interne 56 et externe 57 se font face dans une direction radiale à l'axe longitudinal X6.

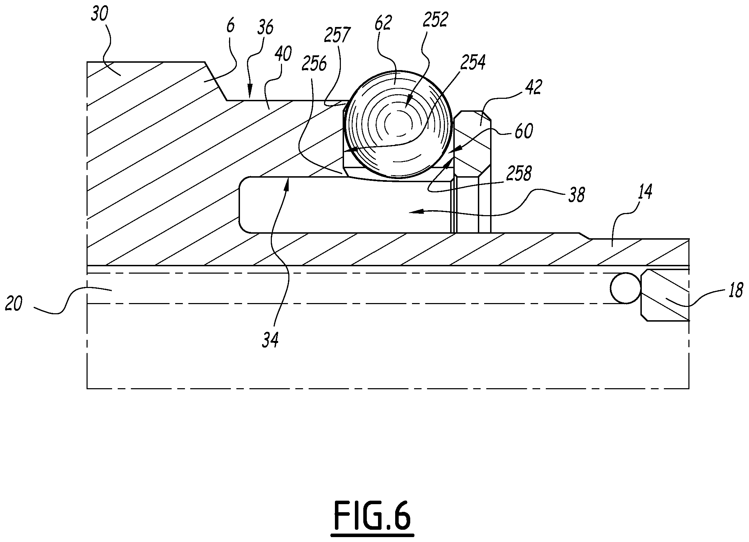

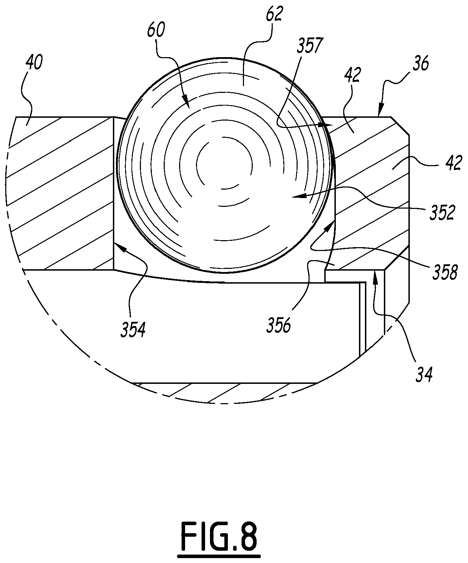

Les saillies internes et externes 56 et 57, qui sont représentées à une échelle relativement grande sur les figures 1 à 3, sont aussi visibles avec les références 256, 257, 356 et 357 et à plus petite échelle sur les figures 6 et 8, qui concernent d'autres modes de réalisation de l'élément mâle 2 mais dans lesquels les saillies ont la même structure que dans le premier mode de réalisation.

On définit une deuxième paroi 58 comme étant chaque portion de la surface distale 44 située en regard d'une rainure longitudinale 52 selon l'axe longitudinal X6. Dans l'exemple des figures 1 à 4, il y a donc quatre deuxième parois 58.

Pour chaque rainure longitudinale 52, on définit un logement radial 60 comme étant un volume délimité, du côté distal, par la première paroi 54 de cette rainure longitudinale 52 et, du côté proximal, par la deuxième paroi 58 située en regard. Chaque logement radial 60 est aussi délimité, du côté intérieur, par la face interne 34 de la couronne 32 et, du côté extérieur, par la face externe 36 de la couronne 32.

Pour chaque logement radial 60 et pour la face interne 34, on définit un diamètre de passage interne D53 comme étant la plus petite dimension entre deux points diamétralement opposés par rapport à l'axe A52, l'un des points appartenant à la première paroi 54, au niveau de l'une des saillies internes 56 située au niveau de cette face interne 34, et l'autre point appartenant à la deuxième paroi 58 en regard ou à une autre portion de la première paroi 54.

De même, pour chaque logement radial 60 et pour la face externe 36, on définit un diamètre de passage externe D55 comme étant la plus petite dimension entre deux points diamétralement opposés par rapport à l'axe A52, l'un des points appartenant à la première paroi 54, au niveau de l'une des saillies externes 57 située au niveau de cette face externe 36, et l'autre point appartenant à la deuxième paroi 58 en regard ou à une autre portion de la première paroi 54.

Les diamètres de passage interne et externe D53 et D55 sont de préférence identiques.

Pour chaque logement radial 60, les diamètres de passages interne et externe D53 et D55 mesurés au niveau des faces interne 34 ou externe 36 sont inférieurs au diamètre interne D52. Autrement dit, les rainures longitudinales 52 sont plus resserrées au niveau de leur jonction avec la face interne 34 et au niveau de leur jonction avec la face externe 36 qu'au niveau de la portion de cylindre d'axe A52, cette portion de cylindre étant disposée entre les saillies interne 56 et externe 57 du logement radial 60 selon une direction radiale à l'axe longitudinal X6.

Les saillies interne 56 et externe 57 s'étendent à l'intérieur du logement radial 60.

Pour chaque logement radial 60, la distance axiale entre la deuxième paroi 58 et le fond de la rainure longitudinale 52 est égale au diamètre D52. La distance axiale s'entend comme la distance maximale entre la deuxième paroi 58 et le fond de la rainure 52.

Pour chaque rainure longitudinale 52, les diamètres de passage D53 et D55 sont inférieurs au diamètre interne D52 ; autrement dit les saillies interne 56 et externe 57 forment des resserrements de chaque logement radial 60, au niveau des faces interne 34 et externe 36 de la couronne 32.

L'élément mâle 2 comprend, en outre, des billes 62 de verrouillage, qui sont réalisées en métal, de préférence en acier inoxydable, et qui présentent chacune un diamètre D62. Une bille 62 est logée dans chacun des logements radiaux 60.

Le diamètre D62 des billes est inférieur au diamètre interne D52 des rainures longitudinales 52. Ainsi la bille 62 de verrouillage dispose sensiblement d'autant de jeu avec son logement radial 60 dans la direction longitudinale que dans la direction orthoradiale et la deuxième paroi 58 guide le mouvement radial de la bille 62 de verrouillage entre la position extérieure et la position intérieure.

D'un autre côté, le diamètre D62 des billes 62 est strictement supérieur aux diamètres de passage interne D53 et externe D55 de chaque logement radial 60. Les billes 62 sont ainsi retenues au sein de leur logement radial 60 respectif dans une direction radiale à l'axe longitudinal X6.

Autrement dit, une bille 62 est retenue au sein de son logement radial 60 respectif par les resserrements, qui sont constitués des saillies interne 56 et externe 57 ménagées à la jonction de ce logement radial et des surfaces interne 34 et externe 36 de la couronne 30. Les diamètres de passage D53 et D55 et la hauteur radiale de la portion de cylindre de la rainure longitudinale 52 sont dimensionnés de sorte que les billes 62 sont mobiles radialement au sein de leur logement radial 60 respectif et que les billes 62 émergent des faces interne 34 ou externe 36, lors de leurs mouvements de translation radiale à l'axe longitudinal X6 au sein des logements radiaux 60. Les billes 62 sont mobiles entre une position extérieure et une position intérieure, la position extérieure étant radialement plus éloignée de l'axe longitudinal X6 que la position intérieure. En position extérieure, les billes 62 émergent partiellement de la face externe 36 de la couronne 32 mais n'émergent pas de la face interne 34. Dans la position intérieure, les billes 62 émergent partiellement de la face interne 34 de la couronne 32, mais n'émergent pas de la face externe 36 de la couronne 32.

On décrit à présent l'élément femelle 4, visible sur la figure 1.

L'élément femelle 4 comprend un corps 64, qui s'étend selon un axe longitudinal X64 qui est confondu avec les axes X-X' et X6 dans la configuration de la figure 1. Le corps 64 de l'élément femelle 4 est réalisé en métal, par exemple en acier inoxydable ou en laiton.

Le corps 64 est creux, présente une symétrie de révolution autour de l'axe longitudinal X64 et délimite un passage intérieur 66 traversant, dont l'extrémité distale est configurée pour recevoir l'extension cylindrique 14 de l'élément mâle 2.

Le corps 64 présente une extrémité proximale 67 et une extrémité distale 70. Du côté de l'extrémité proximale 67, l'extérieur du corps 64 est fileté de façon à pouvoir être assemblé à une canalisation non représentée.

Du côté de l'extrémité distale 70, le passage intérieur 66 est logé dans une extension cylindrique 72 du corps 64. L'extension cylindrique 72 présente un renflement intérieur 74 qui forme une butée pour une soupape annulaire 68 mobile à l'intérieur du passage 66. La soupape annulaire 68 est repoussée vers l'avant du corps 64 par un ressort hélicoïdal 76.

La soupape annulaire 68 entoure un poussoir 78 qui s'étend le long de l'axe longitudinal X64. Le poussoir est fixe au sein du passage intérieur 66 et présente une gorge périphérique externe dans laquelle est logé un organe d'étanchéité 80. Dans l'exemple des figures, l'organe d'étanchéité 80 est un joint torique.

L'élément femelle 4 comprend aussi un organe d'étanchéité 82, logé dans une gorge périphérique interne ménagée à l'extrémité distale 70 de l'extension cylindrique 72. Dans l'exemple des figures, l'organe d'étanchéité 82 est un joint torique.

Le corps 64 comprend un manchon avant 84, un manchon intermédiaire 86, un manchon externe 88, un adaptateur 90 et des billes d'assemblage 92. Le manchon avant 84, le manchon intermédiaire 86, le manchon externe 88, l'adaptateur 90 et les billes d'assemblage 92 sont assemblés fixement les uns aux autres par déformation plastique de l'extrémité proximale du manchon externe 88 autour d'un logement ménagé dans l'adaptateur 90 pour les billes d'assemblage 92.

L'élément femelle 4 comprend aussi une bague de verrouillage 94 montée autour du manchon avant 84 et du manchon externe 88.

La bague de verrouillage 94 est repoussée vers l'avant dans une position dite « de verrouillage » contre une butée du manchon avant 84 par un ressort de rappel 96, qui prend appui conjointement sur une face radiale avant 97 du manchon externe 88 et sur une face radiale arrière 99 de la bague de verrouillage 94.

La bague de verrouillage 94 présente une face avant 98 et une face de verrouillage 100, toutes deux orientées vers l'axe X64. La face avant 98 est divergente vers l'avant par rapport à l'axe longitudinal X64. La face de verrouillage 100 présente une forme de cylindre de section circulaire centré sur l'axe longitudinal X64.

Le manchon avant 84 présente, à une extrémité distale 101, une face inclinée 102 et une gorge annulaire externe 104. La face inclinée 102 est convergente vers l'avant par rapport à l'axe longitudinal X64 et disposée plus en avant que la gorge annulaire externe 104. En position de verrouillage de la bague de verrouillage 94, la face inclinée 102 s'étend au-delà de la face avant 98 dans la direction avant.

La gorge annulaire externe 104 présente une forme de section de tore centré sur l'axe longitudinal X64, est orientée vers l'extérieur et est adaptée pour recevoir partiellement les billes 62 de verrouillage.

En position de verrouillage, la face de verrouillage 100 est située en regard de la gorge annulaire externe 104 dans une direction radiale à l'axe X64. La face de verrouillage 100 et la gorge annulaire externe 104 définissent alors un volume de réception 106 des billes de verrouillage 62. Autrement dit, la face de verrouillage 100 limite radialement le volume de réception 106 de sorte que les billes de verrouillage 62 sont maintenues dans leur position intérieure et ne peuvent se déplacer en position extérieure.

Sous l'action d'une force exercée vers l'arrière sur la bague de verrouillage 94 et suffisamment élevée pour vaincre l'effort du ressort 96, la bague de verrouillage 94 est apte à être déplacée en translation axiale vers l'arrière de l'élément femelle 4 dans une position dite « de déverrouillage ». Dans la position de déverrouillage, la face de verrouillage 100 est décalée sur l'arrière par rapport à la gorge annulaire externe 104 et le volume de réception 106 n'est plus radialement limité par la face de verrouillage 100 mais par la face avant 98.

Dans la configuration de la figure 1, l'élément mâle 2 est emmanché avec l'élément femelle 4, et la soupape 18 est repoussée vers l'arrière par le poussoir 78, au sein du passage intérieur 8, vers l'arrière de l'élément mâle 2 dans une position dite « d'ouverture », dans laquelle un fluide peut passer librement par le passage intérieur 8. Conjointement, la soupape annulaire 68 est repoussée vers l'arrière par l'extrémité distale 12 de l'élément mâle 2 dans une position d'ouverture, dans laquelle un fluide peut librement circuler par le passage intérieur 66.

Ainsi, l'élément mâle 2 et l'élément femelle 4 sont conjointement en position d'ouverture et les passages intérieurs 8 et 66 communiquent entre eux et n'entravent pas la circulation de fluide. L'organe d'étanchéité 82 assure l'étanchéité entre l'extension cylindrique 72 et l'extension cylindrique 14.

Sur la Figure 3, l'élément mâle 2 n'est pas emmanché sur un élément femelle 4. La soupape 18 est repoussée vers l'avant sous l'effet du ressort 20 et est en butée sur le renflement intérieur distal 16. Un organe d'étanchéité 28, logé dans une rainure périphérique externe de la soupape 18, assure alors l'étanchéité entre la soupape 18 et le renflement intérieur distal 16. Le passage intérieur 8 est alors obturé de façon étanche. L'élément mâle 2 se trouve dans une position dite « de fermeture ». Dans l'exemple des figures, l'organe d'étanchéité 28 est un joint torique.

Lorsque l'élément mâle 2 n'est pas emmanché dans l'élément femelle 4, la soupape annulaire 68 est repoussée vers l'avant par le ressort hélicoïdal 76 dans une position de fermeture. La soupape annulaire 68 coopère alors conjointement avec les organes d'étanchéité 80 et 82, obturant de façon étanche le passage intérieur 66. L'élément femelle 4 se trouve dans une position dite « de fermeture ».

Dans une première phase d'accouplement, l'extension cylindrique 14 de l'élément mâle 2 est rapprochée de l'élément femelle 4 selon l'axe d'emmanchement X-X' et pénètre dans le manchon avant 84 jusqu'à ce que son extrémité distale 12 parvienne en contact avec la soupape annulaire 68 et que la soupape 18 de l'élément mâle 4 parvienne en contact avec le poussoir 78. Dans une phase ultérieure du rapprochement, l'extrémité distale 101 de l'élément femelle 4 pénètre dans l'espace annulaire 38 et la face inclinée 102 pousse les billes 62 de verrouillage en direction de leur position extérieure. L'extension cylindrique 14 vient en contact étanche avec l'organe d'étanchéité 82. En poursuivant le rapprochement, les billes 62 de verrouillage, qui émergent alors de la face externe 36 de la couronne 32, entrent en contact avec la face avant 98 de la bague de verrouillage 94 et repoussent la bague de verrouillage 94 en arrière à l'encontre du ressort 96 jusqu'à ce que les billes 62 de verrouillage soient en regard de la gorge annulaire externe 104 du corps 64 de l'élément femelle 4. À ce stade, la bague de verrouillage 94 est repoussée par le ressort 96 vers sa position de verrouillage et repousse les billes 62 de verrouillage dans la gorge annulaire externe 104, en position intérieure, dans laquelle elles sont maintenues par la face de verrouillage 100 de la bague de verrouillage 96. Les billes 62 de verrouillage forment alors obstacle au déplacement longitudinal de l'extension cylindrique 72 de l'élément femelle 4 hors de l'espace annulaire 38. La configuration accouplée du raccord R est atteinte. La connexion de la canalisation 7 avec la canalisation associée à l'élément femelle 4 est alors établie. L'accouplement est dit automatique puisque le seul mouvement de rapprochement du corps 64 de l'élément femelle 4 et du corps 6 de l'élément mâle 2 selon l'axe d'emmanchement X-X' permet d'atteindre la configuration accouplée.

Pour désaccoupler le raccord R, l'opérateur déplace la bague de verrouillage 94 en position de déverrouillage, ce qui permet aux billes 62 de verrouillage de se déplacer en position extérieure et de libérer le passage pour l'extension cylindrique 72 de l'élément femelle 4 hors de l'espace annulaire 38. Avec le retrait de l'extension cylindrique 72, les soupapes 18 et 68 se referment.

On décrit à présent le procédé de fabrication et d'assemblage de la couronne 32 de l'élément mâle 2.

Dans une étape préalable, les pièces 40 et 42 sont usinées. En particulier les rainures longitudinales 52 et les saillies internes 56 et externes 57 sont usinées. Cette étape peut être mise en oeuvre de façon relativement aisée car les parois 54 et 58 sont bien accessibles puisqu'aucune d'entre elles n'est une surface fermée. En d'autres termes, l'usinage est plus facile que dans le cas où la couronne est monobloc et où il faudrait créer les surfaces dans des orifices de petites dimensions. En particulier, chaque rainure longitudinale 52 est réalisée à l'aide d'une fraise dont l'axe de rotation est radial à l'axe X6 et le diamètre légèrement supérieur au diamètre D62 d'une bille 62 de verrouillage sur une hauteur égale à la hauteur radiale de la portion de cylindre de la rainure longitudinale 52. Deux chanfreins à 30 degrés sur la fraise permettent de réaliser en une seule opération la rainure longitudinale 52 et les saillies interne 56 et externe 57 lors du mouvement d'usinage de la fraise le long de l'axe longitudinal X6.

Dans une première étape d'assemblage, la deuxième partie 42 est disposée de façon que les rainures longitudinales 52 sont orientées vers le haut, c'est-à-dire que la surface d'appui proximale 46 est tournée vers le haut. Les billes 62 sont introduites dans une rainure longitudinale 52 respective et du fait de la gravité viennent en butée contre le fond des rainures 52. Les saillies internes 56 et externes 57, qui ont été créées lors de l'étape d'usinage préalable, maintiennent les billes 62 dans les rainures 52 dans une direction radiale à l'axe X6.

Dans une deuxième étape, la première partie 40 de la couronne 32 est rapprochée de la deuxième partie 42 et engagée avec la deuxième partie 42. La jupe 48 est introduite dans l'espace annulaire 38, rendant aisé le centrage radial de la première partie 40 par rapport à la deuxième partie 42. Une fois les surfaces distale 44 et proximale 46 mises en contact longitudinal l'une avec l'autre, chaque bille 62 est retenue dans son logement radial 60 respectif. Autrement dit, le mouvement radial des billes 62 est limité par les resserrements 56 des logements radiaux 60. Le mouvement longitudinal des billes 62 est limité par le fond des rainures 52 et par la deuxième paroi 58.

De préférence, les surfaces distales et proximales 44 et 46 sont en appui surfacique l'une sur l'autre, ce qui garantit une bonne géométrie des logements 60 et une bonne solidité de l'élément mâle 2.

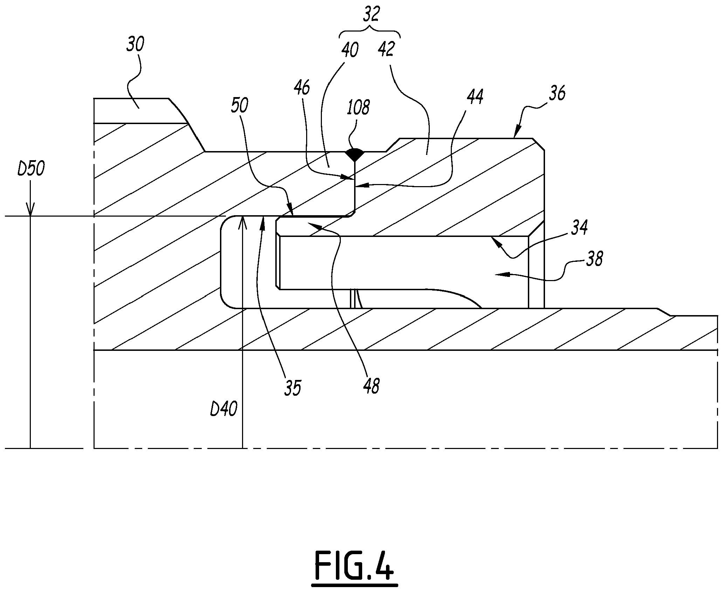

Finalement, les première et deuxième parties 40 et 42 de la couronne 32 sont solidarisées l'une à l'autre. Dans l'exemple de la figure 4, l'opération de solidarisation est réalisée par soudage, de préférence par soudage sans apport de matière, dans l'exemple par soudage laser. Sur la figure 4, le faisceau laser de soudage est focalisé au niveau de la jonction des surfaces d'appui distale 44 et proximale 46 avec la face externe 36 de la couronne 32, le soudage laser résultant en un cordon de soudure 108. Le cordon de soudure 108 solidarise les première et deuxième parties 40 et 42 en rotation autour de l'axe X6 et en translation le long de l'axe X6.

Avantageusement, le contact des surfaces d'appui distales et proximales 44 et 46 entre deux rainures longitudinales 52 consécutives est continu, ce qui facilite le soudage et favorise une soudure solide.

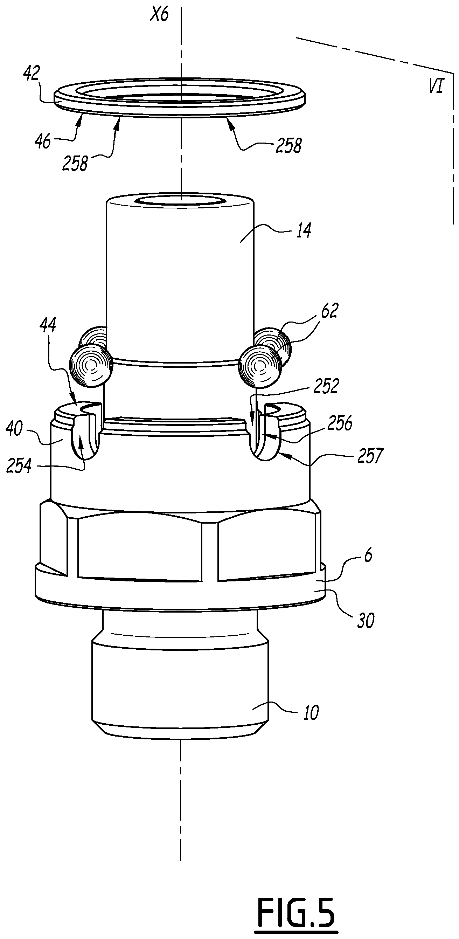

Dans les deuxième à sixième modes de réalisation de l'élément mâle 2 représenté sur les figures 5 et suivantes, les éléments analogues à ceux du premier mode de réalisation portent les mêmes références et fonctionnent de la même façon.

En particulier, dans les deuxième à cinquième modes de réalisation, la surface distale 44 de la première partie 40 et la surface proximale 46 de la deuxième partie 42 sont en contact longitudinal l'une avec l'autre et sont donc respectivement une surface d'appui distale 44 et une surface d'appui proximale 46. Dans ce qui suit, on décrit principalement les différences entre le premier mode et les autres modes de réalisation.

Dans le deuxième mode de réalisation des figures 5 et 6, des rainures longitudinales 252, qui ont la forme d'encoches, sont ménagées dans la première partie 40 de la couronne 32. Les rainures longitudinales 252 définissent chacune une première paroi 254. Les rainures longitudinales 252 débouchent axialement sur la surface distale 44 de la première partie 40. Dans le deuxième mode, la surface distale 44 forme à la fois une surface d'embouchure et la surface d'appui distale.

Des saillies internes 256 et externes 257 sont ménagées à l'intersection des rainures longitudinales 252 avec les faces interne 34 et externe 36 de la couronne, en particulier à la jonction des premières parois 254 avec les faces interne 34 et externe 36.

Sur la figure 5, l'élément mâle 2 du deuxième mode de réalisation est représenté inversé verticalement par rapport à l'élément mâle 2 du premier mode de réalisation représenté en figure 2, pour décrire le fait que lorsque les billes 62 sont introduites dans les rainures longitudinales 252, les billes 62 sont maintenues par gravité au sein des rainures longitudinales 252 tant que la première partie 42 n'est pas assemblée à la première partie 40.

Ici, la deuxième partie 42 présente la forme d'une rondelle, particulièrement simple à fabriquer, dont on note 46 la surface proximale tournée vers la première partie 40. Cette surface proximale 46 forme une surface d'appui proximale, analogue à celle du premier mode de réalisation, qui est en contact longitudinal avec la surface distale 44 formant surface d'appui distale.

La surface distale 44 est en regard selon l'axe longitudinal X6 d'une surface de la deuxième partie 42. En d'autres termes, la surface distale 44 et la deuxième partie 42 sont tournées l'une vers l'autre et alignées le long d'un axe parallèle à l'axe longitudinal X6. La surface distale 44 est en regard selon l'axe longitudinal X6 de la surface proximale 46.

Les portions de la surface d'appui proximale 46 situées sur la deuxième partie 42 en regard de chaque rainure longitudinale 252 définissent des deuxièmes parois 258.

Pour chaque rainure longitudinale 252, la première paroi 254, la deuxième paroi 258 située en regard de cette rainure 252 selon l'axe longitudinal X6 et les saillies interne 256 et externe 257 de cette rainure 252 définissent un logement radial 60. Les saillies interne 256 et externe 257 constituent un rétrécissement du logement radial 60 au niveau des faces interne 34 et externe 36.

Lors de l'opération de solidarisation de la deuxième partie 42 à la première partie 40, notamment par soudage, un outillage spécifique doit être utilisé pour garantir le bon positionnement relatif des pièces. En particulier, un bon contact des surfaces d'appui distales et proximales 44 et 46 entre elles et un bon centrage des première et deuxièmes partie 40 et 42 sur l'axe X6 pendant l'opération de solidarisation sont nécessaires, pour que l'élément mâle 2 assemblé présente une géométrie correcte et que chaque bille 62 soit retenue dans le logement radial 60 dans laquelle cette bille 62 est logée.

En variante non représentée, la deuxième partie 42 peut comprendre une jupe de guidage, pour assurer le centrage radial de la deuxième partie 42 par rapport à la première partie 40 lors de l'assemblage de la couronne 32. La jupe peut être annulaire ou formée de portions annulaires. La jupe peut se mettre en place autour de la première partie 40.

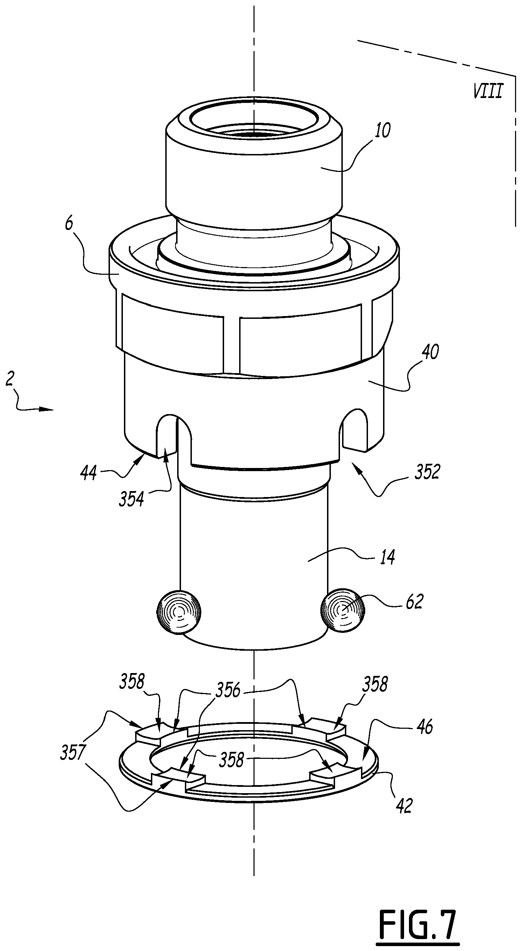

Dans le troisième mode de réalisation représenté sur les figures 7 à 9, des rainures longitudinales 352, qui ont la forme d'encoches, sont ménagées dans la première partie 40 de la couronne 32. Les rainures longitudinales 352 définissent chacune une première paroi 354. Les rainures longitudinales 352 débouchent axialement sur la surface distale 44 vers l'arrière. La surface distale 44 forme une surface d'embouchure, qui est en regard selon l'axe longitudinal X6 de la surface proximale 46 de la deuxième partie 42. La surface distale 44 est, en outre, en contact longitudinal avec la surface proximale 46. Dans le troisième mode, les surfaces distale 44 et proximale 46 sont donc des surfaces d'appui distale et proximale 44 et 46.

Il existe une intersection entre la première paroi 54 et la surface d'appui distale 44. La deuxième partie 42 comprend des deuxièmes parois 358, qui sont ménagées en saillie de la surface d'appui proximale 46, chaque deuxième paroi 358 étant engagée dans une rainure longitudinale 352 en configuration assemblée de la couronne 32.

Les saillies interne 356 et externe 357 sont ménagées ici sur chaque deuxième paroi 358 à la jonction de la deuxième paroi 358 avec respectivement les faces interne 34 et externe 36 de la couronne 32.

Pour chaque rainure longitudinale 352, la première paroi 354, la deuxième paroi 358 située en regard de cette rainure 352 selon l'axe longitudinal X6 et les saillies interne 356 et externe 357 définissent un logement radial 60, les saillies interne 356 et externe 357 constituant un rétrécissement du logement radial 60 au niveau des faces interne 34 et externe 36 de la couronne 32.

Dans le troisième mode de réalisation, l'usinage des rainures longitudinales 352 dans la première partie 40 peut être réalisé simplement, notamment par fraisage.

L'usinage de la deuxième partie 42, en particulier l'usinage des deuxièmes parois 358 et des saillies internes 356 et externes 357 reste aisé car les surfaces associées sont facilement accessibles.

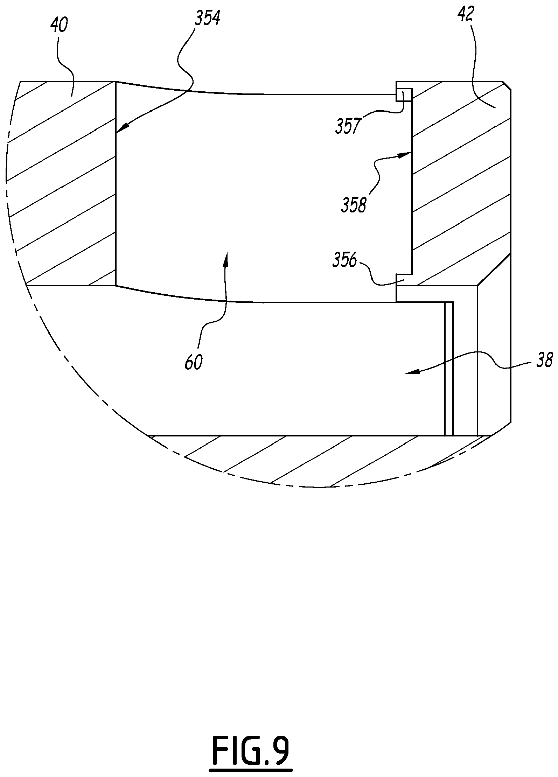

Deux variantes de réalisation des saillies internes 356 et externes 357 sont représentées sur les figures 8 et 9, sachant que dans les deux cas les saillies internes 356 et externes 357 constituent des rétrécissements du logement radial 60. Sur la figure 8, la deuxième paroi 358 orientée vers le logement radial 60 présente un profil courbe et concave, notamment en arc de cercle. Sur la figure 9, la deuxième paroi 358 orientée vers le logement radial 60 présente un profil plan et les saillies interne 356 et externe 357 présentent une section rectangulaire.

En variante non représentée, la deuxième partie 42 peut comprendre une jupe de guidage, pour faciliter, lors de l'assemblage de la couronne 32, son centrage radial par rapport à la première partie 40 et le positionnement des billes 62.

En variante non représentée, les deuxièmes parois 358 peuvent être des portions de la surface d'appui proximale 46. Dans ce cas, les deuxièmes parois 358 ne sont pas engagées dans les rainures 352 mais situées en regard dans la direction longitudinale des rainures 352.

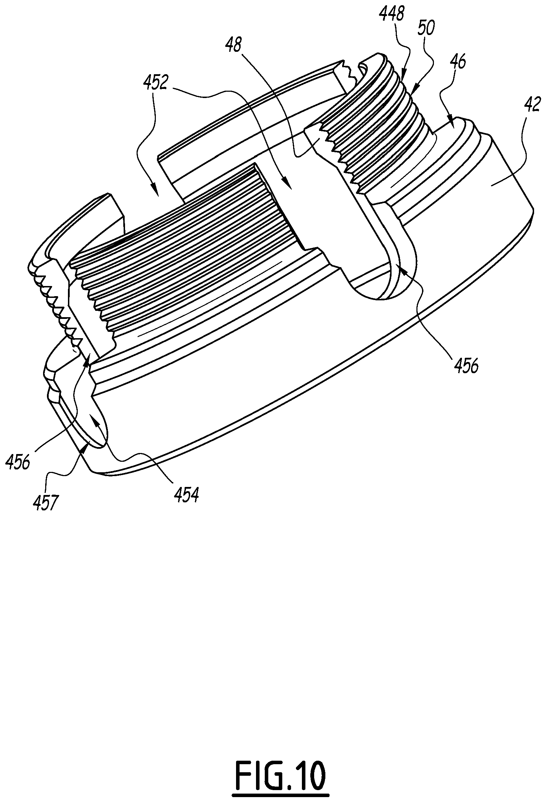

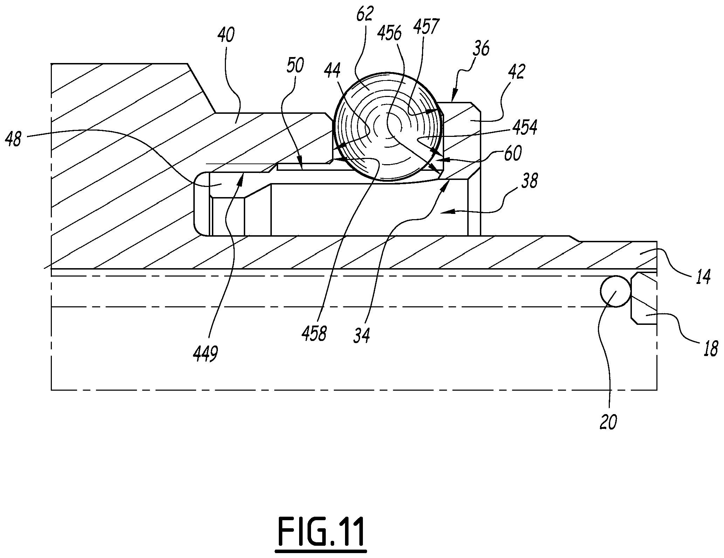

Le quatrième mode de réalisation représenté sur les figures 10 et 11 ressemble au premier mode de réalisation en ce sens que les rainures longitudinales 452 avec première paroi 454 sont des encoches ménagées dans la deuxième partie 42 et les saillies internes 456 et externes 457 sont aussi ménagées dans la deuxième partie 42. Les rainures longitudinales 452 débouchent axialement de la surface proximale 46, qui forme aussi une surface d'embouchure. En configuration assemblée des première et deuxième parties 40 et 42, la surface proximale 46 est en regard selon l'axe longitudinal de la surface distale 44 de la première partie 40.

Le quatrième mode diffère du premier mode principalement en ce que la jupe 48 présente un filetage 448, ménagé sur la face externe 50 de la jupe 48. Le filetage 448 coopère avec un taraudage 449 complémentaire, ménagé sur une surface interne de la première partie 40 de la couronne 32. En fin de vissage de la jupe 48 dans le taraudage 449, la surface distale 44 de la première partie 40 est en butée longitudinale contre la surface proximale 46 de la deuxième partie 42 et la surface d'appui distale 44 forme la deuxième paroi 458 des logements radiaux 60. Les surfaces distale 44 et proximale 46 sont donc aussi des surfaces d'appui distale et proximale, qui sont en contact longitudinal l'une avec l'autre.

Lors de l'assemblage, la jupe 48 facilite le centrage radial de la deuxième partie 42 par rapport à la première partie 40 et la coopération du filetage 448 avec le taraudage 449 constitue un moyen de solidarisation en translation longitudinale réversible de la première partie 40 avec la deuxième partie 42.

Cette solidarisation réversible peut-être complétée, le cas échéant, par une solidarisation définitive telle qu'un soudage tel que décrit précédemment, cet exemple n'étant pas limitatif.

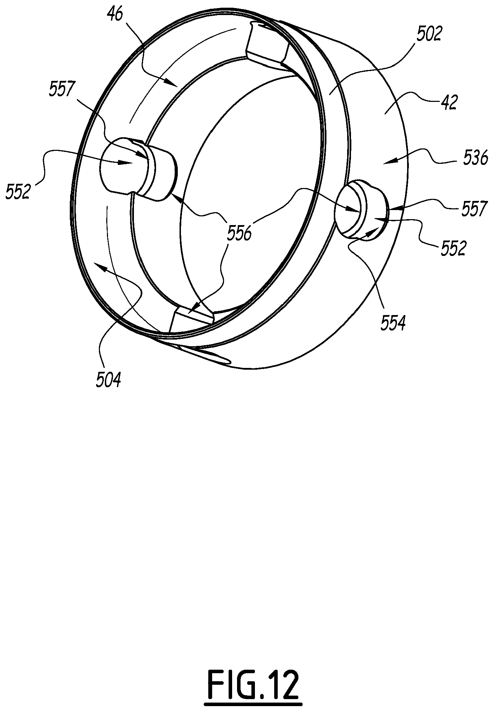

Dans le cinquième mode de réalisation représenté sur les figures 12 à 15, la deuxième partie 42 est réalisée en laiton. La deuxième partie 42 comprend une paroi 502, qui s'étend axialement depuis la surface d'appui proximale 46 vers l'arrière et qui prolonge une surface radiale externe 536 de la deuxième partie 42. La paroi 502 présente une surface interne 504, orientée vers l'axe longitudinal X6. La paroi 502 est conçue et fabriquée pour être déformable plastiquement à l'aide d'outils usuels.

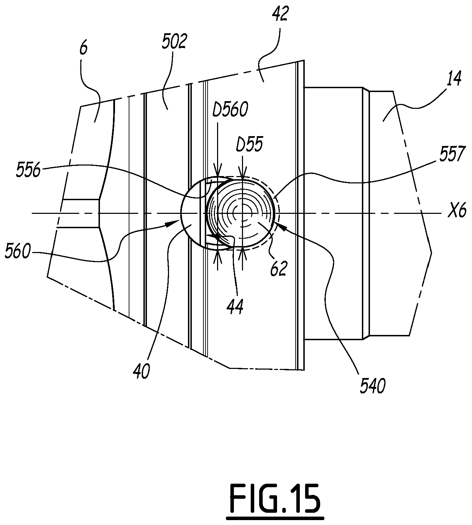

Des rainures longitudinales 552 en forme de lumières oblongues sont ménagées dans la deuxième partie 42. Chaque rainure longitudinale 552 débouche sur la surface radiale externe 536 de la deuxième partie 42 par un trou oblong, orienté axialement, de section fermée, et comprend une portion distale 540 et une portion proximale 560, visibles sur la figure 15 et formant la première paroi 554. La portion distale 540 présente une première paroi 554 avec, selon l'axe X6, un fond en portion de cylindre d'axe A52 radial à l'axe longitudinal X6, la portion proximale 560 ayant, selon l'axe X6, un fond en portion de cylindre d'axe radial parallèle à l'axe A52.

Les rainures longitudinales 552 débouchent axialement sur la surface proximale 46 de la deuxième partie 42. La surface proximale 46 forme ainsi une surface d'embouchure de la deuxième partie 42. En configuration assemblée des première et deuxième parties 40 et 42, la surface proximale 46 est partiellement en regard de la surface distale 44 de la première partie 40 selon l'axe longitudinal X6. Comme dans les modes de réalisation précédents à l'exception du second mode de réalisation, dans le cinquième mode chaque rainure 552 débouche sur la surface proximale 46 dans une zone longitudinale intermédiaire de la rainure 552 et non pas en extrémité longitudinale de la rainure 552. En d'autres termes, il existe une intersection entre la surface proximale 46 et la première paroi 554.

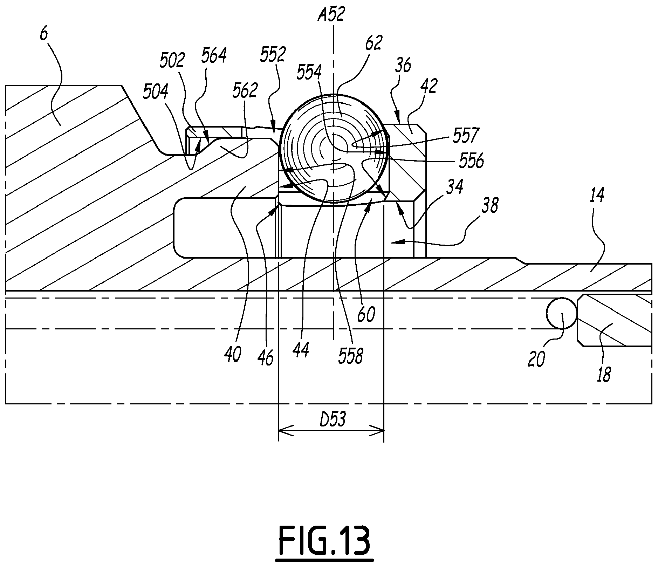

Des saillies interne 556 et externe 557 sont ménagées sur la portion distale 540 à la jonction de chaque rainure longitudinale 552 avec respectivement la surface radiale interne ou la surface radiale externe 536 de la deuxième partie 42, correspondant respectivement aux faces interne 34 et externe 36 de la couronne 32 lorsque les première et deuxième parties 40 et 42 sont assemblées. Les saillies interne 556 et externe 557 définissent respectivement un diamètre de passage interne D53 et un diamètre de passage externe D55. Le diamètre D53 étant visible à la figure 13, tandis que le diamètre de passage externe D55 étant visible à la figure 15. La portion proximale 560 présente un diamètre de passage D560 sur toute sa hauteur radiale. Le diamètre de passage D560 est supérieur au diamètre D55. En particulier, le diamètre de passage D560 est supérieur au diamètre D62 d'une bille 62, permettant, lors de l'assemblage de la première partie 40 avec la deuxième partie 42, l'insertion d'une bille 62 à travers la portion proximale 560 de la rainure longitudinale 552 dans une direction radiale à l'axe longitudinal X6 puis dans la portion distale 540 en déplaçant la bille 62 parallèlement à l'axe longitudinal X6. Comme dans les modes de réalisation précédents, le diamètre de passage externe D55 et le diamètre de passage interne D53 sont inférieurs au diamètre D62, les billes 62 étant ainsi retenues radialement dans les logements radiaux 60 lorsque la deuxième partie 42 est assemblée à la première partie 40. Lorsque la deuxième partie 42 est assemblée à la première partie 40, la surface distale 46 de la première partie 40 forme la deuxième paroi 558 de chaque logement radial 60 d'une bille 62 de verrouillage.

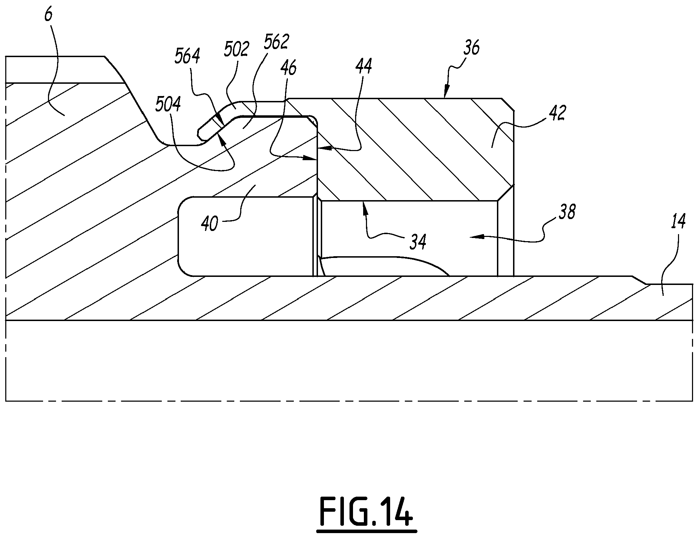

La première partie 40 comprend un épaulement 562, visible sur les figures 13 et 14. L'épaulement 562 est ménagé à la périphérie externe de la première partie 40 et présente une surface d'appui 564, inclinée par rapport à l'axe longitudinal X6 et convergente vers l'arrière de l'élément mâle 2.

Les figures 13 et 14 détaillent les étapes de solidarisation du procédé d'assemblage de la couronne 32.

Lorsque les billes 62 se trouvent engagées dans la portion distale 540, la paroi 502 est engagée autour de l'épaulement 562, pour atteindre la configuration de la figure 13 où la surface distale 44 est en butée axiale contre la surface proximale 46. Les surfaces distale 44 et proximale 46 sont donc aussi des surfaces d'appui distale et proximale, qui sont en contact longitudinal l'une avec l'autre. Lors de l'assemblage, la paroi 502 coopère radialement avec la première partie 40 pour assurer le centrage radial de la deuxième partie 42 par rapport à la première partie 40. Autrement dit, la paroi 502 remplit aussi la fonction d'une jupe de guidage.

Ensuite, la paroi 502 est déformée plastiquement pour atteindre la configuration de la figure 14, dans laquelle la paroi 502 coopère avec l'épaulement 562 pour retenir axialement la deuxième partie 42 sur la première partie 40. La surface interne 504 de la paroi 502 est alors en contact avec une surface radiale externe cylindrique de la première partie 40 et la surface d'appui 564 de l'épaulement 562.

Dans le cinquième mode de réalisation, la solidarisation de la deuxième partie à la première partie se fait par sertissage de la paroi 502, tandis que dans les autres modes, cette solidarisation se fait par soudage.

Autrement dit, les première et deuxième parties 40 et 42 sont solidarisées axialement l'une à l'autre par déformation plastique de la paroi 502 sur l'épaulement 562 de la première partie 40.

Dans l'exemple, la déformation plastique de la paroi 502 est obtenue par sertissage. Plus généralement, la méthode de solidarisation par sertissage permet en particulier l'assemblage de pièces dont les matériaux ne se prêtent pas au soudage, tel que le laiton.

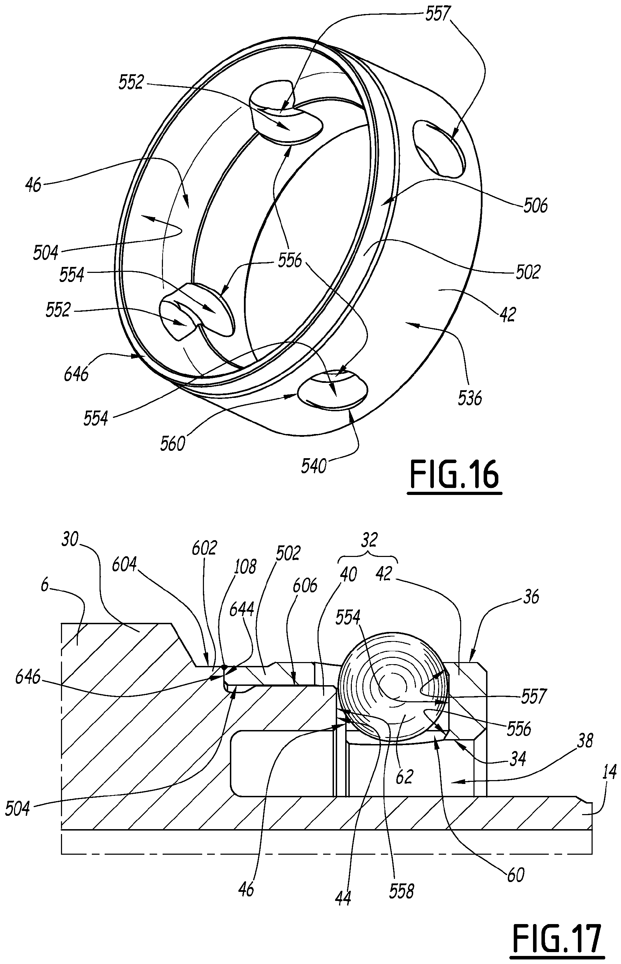

Le sixième mode de réalisation représenté sur les figures 16 à 18 ressemble au cinquième mode de réalisation en ce sens que la deuxième partie 42 comprend une paroi 502, qui s'étend axialement depuis la surface proximale 46 vers l'arrière et qui prolonge une surface radiale externe 536 de la deuxième partie 42.

Comme dans les autres modes de réalisation, les rainures longitudinales 552 traversent radialement de part en part la partie de couronne 40 ou 42 sur laquelle elles sont ménagées. Dans le sixième mode de réalisation, la surface proximale 46 constitue aussi une surface d'embouchure de cette partie de couronne 40 ou 42 sur laquelle les rainures 552 débouchent axialement. La surface proximale 46 et les rainures longitudinales 552 sont bien visibles sur la figure 16.

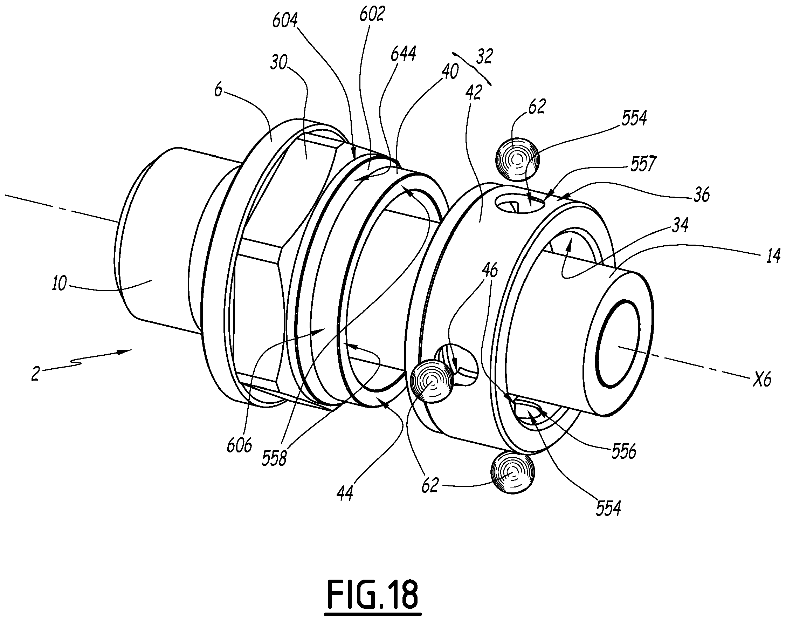

Comme dans les premier, quatrième et cinquième modes de réalisation, la surface distale 44 est une surface périphérique plane, orthogonale à l'axe longitudinal X6, s'étendant tout autour de l'axe longitudinal X6, et dont des portions forment les deuxièmes parois 558 des logements radiaux 60. La surface distale 44 est bien visible sur la figure 18.

Une des principales différences du sixième mode avec tous les autres modes est que dans le sixième mode, la surface d'embouchure, formée par la surface proximale 46, est au moins partiellement en regard de la surface distale 44 selon l'axe longitudinal, sans que les surfaces distale 44 et proximale 46 soient forcément en contact longitudinal l'une avec l'autre. Sur la figure 17, les surfaces distale 44 et proximales 46, vues depuis le plan de coupe, ne sont pas en contact longitudinal l'une avec l'autre.

La première partie 40 est axialement solidaire d'un épaulement 602, qui est disposé au niveau de la jonction entre la couronne 32 et la collerette 30 et qui définit une surface d'appui distale 644, qui est orientée vers l'avant et qui est orthogonale à l'axe X6, et une surface externe 604, qui présente une forme cylindrique, de section circulaire et centrée sur l'axe X6 et qui s'étend en arrière de l'épaulement 602.

La première partie 40 comprend aussi une surface radiale externe 606, qui présente une forme cylindrique, de section circulaire et centrée sur l'axe X6. La surface externe 604 présente un rayon supérieur à un rayon de la surface radiale externe 606 de la première partie. La surface d'appui distale 644 est disposée tout autour de la surface distale 44 formant les deuxièmes parois 558 des logements radiaux 60, en arrière de ces deuxièmes parois 558.

Dans l'exemple illustré, l'épaulement 602 est directement usiné dans le corps 6. En variante non représentée, l'épaulement 602 est formé par une pièce rapportée, qui est solidarisée au corps 6, notamment par soudage. La surface d'appui distale 644 peut ainsi être disposée au niveau de la collerette 30 ou de toute autre partie du corps 6 qui est axialement solidaire de la première partie 40. Cette partie du corps 6 peut être la première partie 40.

La paroi 502 de la deuxième partie 42 comprend, à l'opposé de la surface interne 504, une surface externe 506. La surface externe 506 présente une forme cylindrique, de section circulaire et centrée sur l'axe X6. Les surfaces interne 504 et externe 506 sont reliées l'une à l'autre par une surface d'appui proximale 646, qui est ici orientée vers l'arrière de l'élément mâle 2 et qui présente une forme d'anneau et est orthogonale à l'axe X6.

En configuration assemblée de l'élément mâle 2, tel qu'illustré sur la figure 17, la surface d'appui distale 644 et la surface d'appui proximale 646 sont en contact longitudinal l'une avec l'autre, comme les surfaces 44 et 46 dans les autres modes de réalisation. Lors de l'assemblage, la surface interne 504 de la paroi 502 coopère radialement avec la surface radiale externe 606 de la première partie 40 pour assurer le centrage radial de la deuxième partie 42 par rapport à la première partie 40. Autrement dit, la paroi 502 est aussi une jupe de guidage, qui coopère radialement avec la première partie 40 pour assurer le centrage radial de la deuxième partie 42 par rapport à la première partie 40.

La surface externe 506 de la paroi 502 et la surface externe 604 de l'épaulement 602 présentent avantageusement un même rayon, pour faciliter le soudage, représenté par le cordon de soudure 108, qui solidarise axialement et autour de l'axe X6 la première partie 40 à la deuxième partie 42. Avantageusement, comme les surface d'appui distale 644 et surface d'appui proximale 646 sont toutes deux annulaires et s'étendent sans discontinuité tout autour de l'axe longitudinal X6, le cordon de soudure 108 est continu tout autour de l'axe longitudinal X6. La deuxième partie 42 du sixième mode de réalisation est ainsi réalisée en un matériau compatible avec le soudage, par exemple en acier inoxydable.

La portion distale 540 de chaque rainure longitudinale 552 comprend une saillie externe 557. La saillie interne 556 de chaque rainure longitudinale 552 est ménagée à la fois au niveau de la portion distale 540 et de la portion proximale 560 de la rainure longitudinale 552, à la jonction avec la surface radiale interne de la deuxième partie 42 délimitant la surface radiale interne 34 de la couronne 32.

À l'assemblage de la couronne 32, une bille 62 est engagée dans la portion proximale 560 de chaque rainure longitudinale 552 depuis la surface radiale externe 536. Pour cela, le diamètre de passage de la portion proximale 560 au niveau de la surface radiale externe 536 est supérieur au diamètre D62 d'une bille 62. Puis les deuxièmes parois 558 sont amenées en regard de chaque rainure longitudinale 552 selon l'axe longitudinal X6. Les deuxièmes parois 558 repoussent les billes 62 dans les portions distales 540. La première partie 40 et la deuxième partie 42 sont solidarisées. Chaque deuxième paroi 558 étant alors disposée dans une zone longitudinale intermédiaire de la rainure longitudinale 552, c'est-à-dire à distance longitudinale des extrémités longitudinales de la rainure 552.

En variante non représentée, pour le sixième mode de réalisation, la surface proximale 46 n'est pas orthogonale à l'axe longitudinal X6 mais inclinée par rapport aux directions longitudinale et radiale. En variante non représentée, la surface proximale 46 peut également ne pas être plane.

En variante non représentée, et pour tous les modes de réalisation, d'autres méthodes de solidarisation de la première partie 40 à la deuxième partie 42 selon l'axe longitudinal X6 et autour de l'axe longitudinal X6 sont possibles. En particulier, comme dans le sixième mode de réalisation, la deuxième partie 42 peut être solidarisée au corps 6, le corps 6 étant lui-même solidaire de la première partie 40, les première et deuxième parties 40, 42 étant ainsi solidarisées l'une à l'autre. Bien entendu la méthode de solidarisation est choisie en fonction des matériaux et des conditions d'exploitation. À titre d'exemple non limitatif, la solidarisation peut se faire par collage.

Plus généralement, quel que soit le mode de réalisation, on comprend bien que chaque logement radial 60 est délimité, sur l'avant ou sur l'arrière, par une rainure longitudinale 52, 252, 352, 452 ou 552, ménagée selon les cas sur l'une ou l'autre des première ou deuxième partie 40 ou 42 de la couronne 32. Les rainures longitudinales 52, 252, 352, 452 ou 552 présentent chacune une première paroi 54, 254, 354, 454 ou 554 et débouchent axialement sur la surface distale ou proximale 44 ou 46 de ladite première ou deuxième partie 40 ou 42 dans laquelle les rainures longitudinales 252, 352, 452 ou 552 sont ménagées.

Conjointement, chaque logement radial 60 est aussi délimité selon l'axe longitudinal X6 par une deuxième paroi 58, 258, 358, 458 ou 558 située en regard de chaque rainure longitudinales 52, 252, 352, 452 ou 552 et ménagée sur l'autre des première ou deuxième partie 40 ou 42.

La première paroi 54, 254, 354, 454 ou 554 est alors en regard de la deuxième paroi 58, 258, 358, 458 ou 558 selon l'axe longitudinal X6, avec interposition de la bille 62 uniquement.

Chaque logement radial 60 loge une seule bille 62 et est délimité dans les deux directions orthoradiales opposées par la première paroi 54, 254, 354, 454 ou 554 de la rainure longitudinale 552.

La première paroi 54, 254, 354, 454 ou 554 guide radialement la bille 62 de sa position intérieure à sa position extérieure et inversement. La deuxième paroi 58, 258, 358, 458 ou 558 guide radialement la bille 62 de sa position intérieure à sa position extérieure et inversement.

Dans les premier, quatrième, cinquième et sixième modes de réalisation, les rainures longitudinales 52, 452 et 552 sont ménagées dans la deuxième partie 42, alors que les deuxièmes parois 58, 458 et 558 sont formées par des portions de la surface distale 44 de la première partie 40. À l'inverse, dans le deuxième mode de réalisation, les rainures longitudinales 252 sont ménagées dans la première partie 40, alors que les deuxièmes parois 258 sont formées par des portions de la surface proximale 46 de la deuxième partie 42.

Dans les premier, troisième, quatrième, cinquième et sixième modes de réalisation, chaque deuxième paroi 58, 258, 358, 458, 558 est disposée dans la zone longitudinale intermédiaire de la rainure longitudinale 52, 452, 552.

Dans les six modes de réalisation décrits, les saillies internes 56, 256, 356, 456 ou 556 et externes 57, 257, 357, 457 ou 557 sont ménagées dans l'une seulement parmi la première partie 40 et la deuxième partie 42.

Plus généralement, les rainures longitudinales 52, 252, 452 ou 552 sont ménagées dans l'une des première ou deuxième parties 40 ou 42, tandis que la surface proximale ou distale 46 ou 44 de l'autre des première ou deuxième parties 42 ou 40 forme la deuxième paroi 58, 258, 458, 558 de chaque logement radial 60.

Dans chaque logement radial 60, les saillies interne 56, 256, 356, 456 ou 556 et externe 57, 257, 357, 457 ou 557 peuvent être situées sur l'une ou l'autre des première ou deuxième partie 40 ou 42. En particulier, en variante non représentée, la ou les saillies internes 56, 256, 356, 456 ou 556 sont ménagées sur l'une parmi la première partie 40 et la deuxième partie 42 de la couronne 32 et la ou les saillies externes 57, 257, 357, 457 ou 557 sont ménagées sur l'autre parmi la première partie 40 et la deuxième partie 42 de la couronne 32. Dans tous les cas, les saillies interne 56, 256, 356, 456 ou 556 et externe 57, 257, 357, 457 ou 557 forment des rétrécissements qui retiennent la bille 62 insérée dans chaque logement radial 60.

En variante non représentée, les saillies externes 57, 257, 357, 457 ou 557 peuvent être ménagées conjointement sur les première et deuxième parties 40 et 42. En variante non représentée, les saillies internes 56, 256, 356, 456 ou 556 peuvent être ménagées conjointement sur les première et deuxième parties 40 et 42.

Plus généralement, on comprend que, pour que chaque bille 62 soit retenue dans un logement radial 60 respectif, chaque logement radial 60 doit comporter au moins une saillie interne 56, 256, 356, 456 ou 556 et au moins une saillie externe 57, 257, 357, 457 ou 557. En d'autres termes, au moins une des première ou deuxième parois 40 ou 42 présente une saillie externe 57, 257, 357, 457 ou 557 située à la jonction des parois de chaque logement radial 60 avec la face externe 36 de la couronne 32, tandis que au moins une des première ou deuxième parois 40 ou 42 présente une saillie interne 56, 256, 356, 456, ou 556 à la jonction des parois de chaque logement radial 60 avec la face interne 34 de la couronne 32.

En variante non représentée applicable à tous les modes de réalisation, les saillies internes et/ou externes peuvent être réalisées uniquement sur une portion ou plusieurs portions du pourtour de la première paroi des rainures longitudinales et non sur toute la jonction entre la première paroi et la face interne 34, respectivement externe 36, de préférence au niveau du fond en portion de cylindre des rainures longitudinales.

Les modes de réalisation et les variantes mentionnés ci-dessus peuvent être combinés entre eux pour générer de nouveaux modes de réalisation de l'invention.

## Revendications

1. Élément mâle (2) de raccord (R) fluidique destiné à être accouplé avec un élément femelle (4), l'élément mâle comprenant un corps (6) creux, qui s'étend suivant un axe longitudinal (X6) et qui comporte une extension cylindrique (14) distale, l'élément mâle comportant aussi une couronne (32) axialement solidaire du corps (6), qui entoure l'extension cylindrique et présente une face interne (34) et une face externe (36), la face interne de la couronne définissant avec l'extension cylindrique un espace annulaire (38), des logements radiaux (60) étant ménagés dans la couronne, l'élément mâle comprenant, en outre, des billes (62) de verrouillage, qui sont logées dans les logements radiaux et qui sont mobiles radialement entre une position intérieure dans laquelle les billes émergent partiellement de la face interne (34) de la couronne (32) et une position extérieure dans laquelle les billes n'émergent pas de la face interne de la couronne, les billes (62) étant retenues radialement au sein de leur logement radial (60) respectif par des resserrements constitués de saillies internes (56 ; 256 ; 356 ; 456 ; 556) et externes (57 ; 257 ; 357 ; 457 ; 557) ménagées respectivement à la jonction de chaque logement radial (60) et des faces interne (34) et externe (36) de la couronne,
**caractérisé**
- **en ce que** la couronne (32) est formée par l'assemblage d'une première partie (40) et d'une deuxième partie (42), les première et deuxième parties étant solidaires l'une de l'autre selon l'axe longitudinal (X6), la première partie étant axialement solidaire d'une surface d'appui distale (44; 644) orthogonale à l'axe longitudinal (X6), la deuxième partie (42) étant annulaire et comportant une surface d'appui proximale (46 ; 646), les surfaces d'appui proximale et distale étant en contact longitudinal l'une avec l'autre,
- **en ce que** des rainures longitudinales (52 ; 252 ; 352 ; 452 ; 552) sont ménagées dans l'une des première ou deuxième parties (40 ou 42) de la couronne, les rainures longitudinales présentant chacune une première paroi (54 ; 254 ; 354 ; 454 ; 554) et débouchant axialement sur une surface d'embouchure (44 ou 46) de cette partie de la couronne, la surface d'embouchure étant au moins partiellement en regard d'une surface de l'autre des première ou deuxième parties (42 ou 40) de la couronne selon l'axe longitudinal, l'autre des première ou deuxième parties (42 ou 40) de la couronne présentant des deuxièmes parois (58 ; 258 ; 358 ; 458 ; 558) en regard de chaque rainure longitudinale selon l'axe longitudinal, chaque logement radial (60) étant délimité par la première paroi de la rainure longitudinale et la deuxième paroi en reg ard,
- **en ce que** au moins une des première ou deuxième parois présente la saillie externe ou au moins une des saillies externes (57 ; 257 ; 357 ; 457 ; 557) située à la jonction des parois de chaque logement radial (60) avec la face externe (36) de la couronne et
- **en ce que** au moins une des première ou deuxième parois présente la saillie interne ou au moins une des saillies internes (56 ; 256 ; 356 ; 456 ; 556) située à la jonction des parois de chaque logement radial (60) avec la face interne (34) de la couronne (32), les saillies interne et externe s'étendant à l'intérieur de chaque logement radial et formant les resserrements de retenue radiale des billes (62) de verrouillage dans le logement radial (60).

2. Elément mâle (2) selon la revendication précédente, **caractérisé en ce que** les rainures longitudinales (52 ; 452 ; 552) sont ménagées dans la deuxième partie (42).

3. Élément mâle (2) selon l'une quelconque des revendications précédentes, **caractérisé en ce que** chaque deuxième paroi (58 ; 358 ; 458 ; 558) est disposée dans une zone longitudinale intermédiaire de la rainure longitudinale (52 ; 352 ; 452 ; 552).

4. Elément mâle (2) selon l'une quelconque des revendications précédentes, **caractérisé en ce que** la première partie (40) est monobloc avec l'extension cylindrique (14).

5. Elément mâle (2) selon l'une quelconque des revendications précédentes, **caractérisée en ce que** les saillies internes (56 ; 256 ; 356 ; 456 ; 556) et externes (57 ; 257 ; 357 ; 457 ; 557) sont ménagées dans une partie seulement parmi la première partie (40) et la deuxième partie (42).

6. Elément mâle (2) selon l'une quelconque des revendications précédentes, **caractérisée en ce que** les saillies internes (56 ; 256 ; 356 ; 456 ; 556) et externes (57 ; 257 ; 357 ; 457 ; 557) sont disposées à la jonction de la première paroi (54 ; 254 ; 354 ; 454 ; 554) avec les faces interne (34) et externe (36) de la couronne (32).

7. Élément mâle (2) selon l'une quelconque des revendications précédentes, **caractérisée en ce que** la deuxième partie (42) comprend une jupe de guidage (48, 502), qui coopère radialement avec la première partie (40) pour assurer le centrage radial de la deuxième partie (42) par rapport à la première partie (40).

8. Élément mâle (2) selon la revendication précédente, **caractérisé en ce que** la jupe de guidage (502) comprend la surface d'appui proximale (646), qui est ménagée sur une extrémité arrière de la jupe de guidage.

9. Élément mâle (2) selon l'une quelconque des revendications 1 à 7, **caractérisé en ce que** la surface d'embouchure (44 ; 46) est la surface d'appui (44 ; 46) de celle des première ou deuxième parties (40, 42) comprenant les rainures longitudinales (52 ; 252 ; 352 ; 452 ; 552).

10. Élément mâle (2) selon l'une quelconque des revendications précédentes, **caractérisé en ce que** les rainures longitudinales (552) sont des lumières oblongues ménagées dans la deuxième partie (42) et qui comprennent une portion distale (540) et une portion proximale (560), **en ce que** la portion proximale (560) de chaque rainure longitudinale présente, au niveau de sa jonction avec la surface radiale externe (536) de la deuxième partie et/ou au niveau de sa jonction avec la surface radiale interne de la deuxième partie, un diamètre (D560) supérieur au diamètre (D62) des billes (62) de verrouillage et **en ce que** la saillie interne ou au moins une des saillies internes (556) et la saillie externe ou au moins une des saillies externes (557) sont formées sur la portion distale (540) de chaque rainure longitudinale (552).

11. Élément mâle (2) selon l'une quelconque des revendications précédentes, **caractérisé en ce que** la deuxième partie (42) comprend une paroi (502) qui s'étend axialement vers l'arrière à partir de la surface d'appui proximale (46), la paroi (502) étant apte à être déformée plastiquement sur un épaulement (562) de la première partie (40) de manière à solidariser axialement la première partie et la deuxième partie.

12. Élément mâle (2) selon l'une quelconque des revendications précédentes, **caractérisé en ce que** la première partie (40) et la deuxième partie (42) sont solidarisées par soudage, de préférence par soudage laser.

13. Élément mâle (2) selon l'une quelconque des revendications précédentes, **caractérisée en ce que** chaque rainure longitudinale (52 ; 252 ; 352 ; 452 ; 552) est délimitée selon l'axe longitudinal (X6) par un fond formé d'une portion de cylindre définissant un diamètre interne (D52) et **en ce que**, pour chaque logement radial (60), la distance axiale entre la deuxième paroi (58 ; 258 ; 358 ; 458 ; 558) et le fond de chaque rainure longitudinale est égale au diamètre interne (D52) de la portion de cylindre du fond.

14. Raccord fluidique (R), comprenant un élément mâle (2) et un élément femelle (4) aptes à être emmanchés l'un avec l'autre selon la direction longitudinale (X6, X-X', X64), l'élément femelle comprenant une extrémité distale (101), dans laquelle est ménagée une gorge annulaire externe (104), et une bague de verrouillage (94) qui présente une face de verrouillage (100), la bague de verrouillage étant apte à passer d'une position de verrouillage, dans laquelle la face de verrouillage est alignée radialement avec la gorge annulaire externe et maintient les billes (62) de verrouillage en position intérieure, et une position de déverrouillage, dans laquelle la face de verrouillage est décalée de la gorge annulaire externe (104) selon l'axe longitudinal (X6), chaque bille étant libre de se déplacer en position extérieure au sein du logement radial (60), en configuration accouplée de l'élément mâle avec l'élément femelle, l'extrémité distale (101) étant logée dans l'espace annulaire (38) de l'élément mâle (2) et les billes (62) de verrouillage étant reçues dans la gorge annulaire externe (104), **caractérisé en ce que** l'élément mâle (2) est selon l'une quelconque des revendications précédentes.

15. Procédé d'assemblage d'un élément mâle (2) de raccord fluidique (R) conforme à l'une quelconque des revendications 1 à 13, **caractérisé en ce que** le procédé d'assemblage comprend au moins des étapes successives consistant à :
a) introduire les billes (62) de verrouillage dans les rainures longitudinales (52 ; 252 ; 352 ; 452 ; 552) ménagées dans l'une des première ou deuxième parties (40 ou 42) de la couronne (32),
b) engager la première partie avec la deuxième partie de la couronne (32), avec une deuxième paroi (58 ; 258 ; 358 ; 458 ; 558) en regard de chaque rainure longitudinale selon l'axe longitudinal (X6), alors que les saillies interne (56 ; 256 ; 356 ; 456 ; 556) et externe (57 ; 257 ; 357 ; 457 ; 557) sont déjà présentes,
c) mettre en contact la surface d'appui distale (44 ; 644) contre la surface d'appui proximale (46 ; 646) selon l'axe longitudinal (X6),
d) solidariser axialement l'une à l'autre les première et deuxième parties (40 et 42) de la couronne (32).

16. Procédé d'assemblage selon la revendication précédente, **caractérisé en ce qu'**à l'étape d), les première et deuxième parties (40 et 42) sont solidarisées l'une à l'autre par soudage, de préférence par soudage laser, ou collage.

## Patentansprüche

1. Steckelement (2) für eine fluidische Kupplung (R), das bestimmt ist, mit einem Buchsenelement (4) gekoppelt zu sein, wobei das Steckelement einen Hohlkörper (6) umfasst, der sich in einer Längsachse (X6) erstreckt und der eine distale zylindrische Erweiterung (14) aufweist, wobei das Steckelement ebenfalls einen Kranz (32) aufweist, der mit dem Körper (6) axial fest verbunden ist, der die zylindrische Erweiterung umgibt und eine innere Fläche (34) und eine äußere Fläche (36) aufweist, wobei die innere Fläche des Kranzes mit der zylindrischen Erweiterung einen ringförmigen Raum (38) definiert, wobei radiale Aufnahmen (60) im Kranz eingerichtet sind, wobei das Steckelement ferner Verriegelungskugeln (62) umfasst, die in den radialen Aufnahmen aufgenommen sind, und die zwischen einer inneren Position, in der die Kugeln teilweise aus der inneren Fläche (34) des Kranzes (32) herausragen, und einer äußeren Position, in der die Kugeln nicht aus der inneren Fläche des Kranzes herausragen, radial beweglich sind, wobei die Kugeln (62) in ihrer jeweiligen radialen Aufnahme (60) von Verengungen radial gehalten werden, die aus inneren (56; 256; 356; 456; 556) und äußeren (57; 257; 357; 457; 557) Vorsprüngen bestehen, die jeweils an der Verbindung jeder radialen Aufnahme (60) und der inneren (34) und äußeren Fläche (36) des Kranzes eingerichtet sind,
**gekennzeichnet dadurch, dass**
- der Kranz (32) vom Zusammenbau eines ersten Teils (40) und eines zweiten Teils (42) gebildet ist, wobei der erste und zweite Teil gemäß der Längsachse (X6) fest miteinander verbunden sind, wobei der erste Teil mit einer distalen, zur Längsachse (X6) orthogonalen Stützoberfläche (44; 644) axial fest verbunden ist, wobei der zweite Teil (42) ringförmig ist und eine proximale Stützoberfläche (46; 646) aufweist, wobei die proximale und distale Stützoberfläche miteinander im Längskontakt sind,
- Längsrillen (52; 252; 352; 452; 552) in einem von dem ersten oder zweiten Teil (40 oder 42) des Kranzes eingerichtet sind, wobei jede Längsrillen eine erste Wand (54; 254; 354; 454; 554) aufweist und axial auf einer Öffnungsoberfläche (44 oder 46) dieses Teils des Kranzes ausmündet, wobei die Öffnungsoberfläche einer Oberfläche des anderen von dem ersten oder zweiten Teil (42 oder 40) des Kranzes gemäß der Längsachse mindestens teilweise zugewandt ist, wobei der andere von dem ersten oder zweiten Teil (42 oder 40) des Kranzes zweite Wände (58; 258; 358; 458; 558) aufweist, die jeder Längsrille gemäß der Längsachse zugewandt sind, wobei jede radiale Aufnahme (60) von der ersten Wand der Längsrille und der zugewandten zweiten Wand begrenzt ist,
- mindestens eine von der ersten oder zweiten Wand den äußeren Vorsprung oder mindestens einen der äußeren Vorsprünge (57; 257; 357; 457; 557) aufweist, der sich an der Verbindung der Wände jeder radialen Aufnahme (60) mit der äußeren Fläche (36) des Kranzes befindet und
- mindestens eine von der ersten oder zweiten Wand den inneren Vorsprung oder mindestens einen der inneren Vorsprünge (56; 256; 356; 456; 556) aufweist, der sich an der Verbindung der Wände jeder radialen Aufnahme (60) mit der inneren Fläche (34) des Kranzes (32) befindet, wobei sich der interne und externe Vorsprung im Inneren jeder radialen Aufnahme befinden und die radialen Halteverengungen der Verriegelungskugeln (62) in der radialen Aufnahme (60) bilden.

2. Steckelement (2) nach vorangehendem Anspruch, **dadurch gekennzeichnet, dass** die Längsrillen (52; 452; 552) im zweiten Teil (42) eingerichtet sind.

3. Steckelement (2) nach einem der vorangehenden Ansprüche, **dadurch gekennzeichnet, dass** jede zweite Wand (58; 358; 458; 558) in einem länglichen Übergangsbereich der Längsrille (52; 352; 452; 552) angeordnet ist.

4. Steckelement (2) nach einem der vorangehenden Ansprüche, **dadurch gekennzeichnet, dass** der erste Teil (40) mit der zylindrischen Erweiterung (14) einteilig ist.

5. Steckelement (2) nach einem der vorangehenden Ansprüche, **dadurch gekennzeichnet, dass** die inneren (56; 256; 356; 456; 556) und äußeren Vorsprünge (57; 257; 357; 457; 557) nur in einem Teil von dem ersten Teil (40) und dem zweiten Teil (42) eingerichtet sind.

6. Steckelement (2) nach einem der vorangehenden Ansprüche, **dadurch gekennzeichnet, dass** die inneren (56; 256; 356; 456; 556) und äußeren Vorsprünge (57; 257; 357; 457; 557) an der Verbindung der ersten Wand (54; 254; 354; 454; 554) mit der inneren (34) und äußeren Fläche (36) des Kranzes (32) angeordnet sind.

7. Steckelement (2) nach einem der vorangehenden Ansprüche, **dadurch gekennzeichnet, dass** der zweite Teil (42) eine Führungsschürze (48, 502) umfasst, die mit dem ersten Teil (40) radial zusammenwirkt, um die radiale Zentrierung des zweiten Teils (42) im Verhältnis zum ersten Teil (40) sicherzustellen.

8. Steckelement (2) nach vorangehendem Anspruch, **dadurch gekennzeichnet, dass** die Führungsschürze (502) die proximale Stützoberfläche (646) umfasst, die auf einem hinteren Ende der Führungsschürze eingerichtet ist.

9. Steckelement (2) nach einem der Ansprüche 1 bis 7, **dadurch gekennzeichnet, dass** die Öffnungsoberfläche (44; 46) die Stützoberfläche (44; 46) derjenigen vom ersten oder zweiten Teil (40, 42) ist, die die Längsrillen (52; 252; 352; 452; 552) umfassen.

10. Steckelement (2) nach einem der vorangehenden Ansprüche, **dadurch gekennzeichnet, dass** die Längsrillen (552) längliche Durchbrüche sind, die im zweiten Teil (42) eingerichtet sind und die einen distalen Abschnitt (540) und einen proximalen Abschnitt (560) umfassen, dass der proximale Abschnitt (560) jeder Längsrille im Bereich seiner Verbindung mit der äußeren radialen Oberfläche (536) des zweiten Teils und/oder im Bereich seiner Verbindung mit der inneren radialen Oberfläche des zweiten Teils einen Durchmesser (D560) aufweist, der größer als der Durchmesser (D62) der Verriegelungskugeln (62) ist und dass der innere Vorsprung oder mindestens einer der inneren Vorsprünge (556) und der äußere Vorsprung oder mindestens einer der äußeren Vorsprünge (557) auf dem distalen Abschnitt (540) jeder Längsrille (552) ausgebildet sind.

11. Steckelement (2) nach einem der vorangehenden Ansprüche, **dadurch gekennzeichnet, dass** der zweite Teil (42) eine Wand (502) umfasst, die sich ab der proximalen Stützoberfläche (46) axial nach hinten erstreckt, wobei die Wand (502) imstande ist, auf einem Absatz (562) des ersten Teils (40) derart plastisch verformt zu werden, dass der erste Teil und der zweite Teil fest miteinander verbunden sind.

12. Steckelement (2) nach einem der vorangehenden Ansprüche, **dadurch gekennzeichnet, dass** der erste Teil (40) und der zweite Teil (42) durch Schweißen, vorzugsweise durch Laserschweißen, fest miteinander verbunden sind.

13. Steckelement (2) nach einem der vorangehenden Ansprüche, **dadurch gekennzeichnet, dass** jede Längsrille (52; 252; 352; 452; 552) in der Längsachse (X6) von einem Boden begrenzt ist, der von einem Zylinderabschnitt gebildet ist, der einen inneren Durchmesser (D52) definiert und dass für jede radiale Aufnahme (60) der axiale Abstand zwischen der zweiten Wand (58; 258; 358; 458; 558) und dem Boden jeder Längsrille gleich dem inneren Durchmesser (D52) des Zylinderabschnitts des Bodens ist.

14. Fluidische Kupplung (R), umfassend ein Steckelement (2) und ein Buchsenelement (4), die imstande sind, in der Längsrichtung (X6, X-X', X64) ineinander eingepresst zu sein, wobei das Buchsenelement ein distales Ende (101) umfasst, in dem eine äußere ringförmige Nut (104) eingerichtet ist, und einen Verriegelungsring (94), der eine Verriegelungsfläche (100) aufweist, wobei der Verriegelungsring imstande ist, aus einer Verriegelungsposition, in der die Verriegelungsfläche radial an der äußeren ringförmigen Nut ausgerichtet ist und die Verriegelungskugeln (62) in innerer Position hält, in eine Entriegelungsposition zu wechseln, in der die Verriegelungsfläche von der äußeren ringförmigen Nut (104) gemäß der Längsachse (X6) versetzt ist, wobei jede Kugel frei ist, sich in der gekoppelten Konfiguration des Steckelements mit dem Buchsenelement in die äußere Position innerhalb der radialen Aufnahme (60) zu verlagern, wobei das distale Ende (101) im ringförmigen Raum (38) des Steckelements (2) aufgenommen ist und die Verriegelungskugeln (62) in der äußeren ringförmigen Nut (104) empfangen sind, **dadurch gekennzeichnet, dass** das Steckelement (2) nach einem der vorangehenden Ansprüche ist.

15. Verfahren zum Zusammenbauen eines Steckelements (2) einer fluidischen Kupplung (R) nach einem der Ansprüche 1 bis 13, **dadurch gekennzeichnet, dass** das Verfahren zum Zusammenbauen mindestens aufeinanderfolgende Schritte umfasst, die darin bestehen:
a) Einsetzen der Verriegelungskugeln (62) in die Längsrillen (52; 252; 352; 452; 552), die in einem von dem ersten oder zweiten Teil (40 oder 42) des Kranzes (32) eingerichtet sind,
b) Verrasten des ersten Teils mit dem zweiten Teil des Kranzes (32) mit einer zweiten Wand (58; 258; 358; 458; 558), die jeder Längsrille gemäß der Längsachse (X6) zugewandt ist, wohingegen der innere (56; 256; 356; 456; 556) und äußere Vorsprung (57; 257; 357; 457; 557) bereits vorhanden sind,
c) Inkontaktversetzen der distalen Stützoberfläche (44; 644) mit der proximalen Stützoberfläche (46; 646) gemäß der Längsachse (X6),
d) axiales festes Verbinden des ersten und zweiten Teils (40 et 42) des Kranzes (32) miteinander.

16. Verfahren zum Zusammenbauen nach vorangehendem Anspruch, **dadurch gekennzeichnet, dass** bei Schritt d) der erste und zweite Teil (40 und 42) durch Schweißen, vorzugsweise durch Laserschweißen, oder Kleben fest miteinander verbunden werden.

## Claims

1. A male element (2) of a fluidic coupling (R) for coupling with a female element (4), the male element comprising a hollow body (6), which extends along a longitudinal axis (X6) and which has a distal cylindrical extension (14), the male element also comprising a ring (32), which is axially integral with the body (6), which surrounds the cylindrical extension and which has an inner face (34) and an outer face (36), the inner face of the ring defining an annular space (38) with the cylindrical extension, radial housings (60) being provided in the ring, the male element further comprising locking balls (62) housed in the radial housings and which are movable radially between an inner position, in which the balls partially emerge from the inner face (34) of the ring (32), and an outer position, in which the balls do not emerge from the inner face of the ring, the balls (62) being radially retained within their respective radial housing (60) by narrowings, which comprise inner projections (56; 256; 356; 456; 456) and outer projections (57; 257; 357; 457; 557), the inner and outer projections being formed where each radial housing (60) meets respectively the inner (34) and outer (36) faces of the ring,
**characterized**:
- **in that** the ring (32) is formed by assembling a first part (40) and a second part (42), the first and second parts being integral with each other along the longitudinal axis (X6), the first part being axially integral with a distal bearing surface (44; 644) orthogonal to the longitudinal axis (X6), the second part (42) being annular and comprising a proximal bearing surface (46; 646), the proximal and distal bearing surfaces being in longitudinal contact with each other,
- **in that** longitudinal slots (52; 252; 352; 452; 552) are provided in one of the first or second parts (40 or 42) of the ring, the longitudinal slots each having a first wall (54; 254; 354; 454; 554) and opening axially onto a mouth surface (44 or 46) of this part of the ring, the mouth surface being at least partially opposite a surface of the other of the first or second parts (42 or 40) of the ring along the longitudinal axis, while the other of the first or second parts (42 or 40) of the ring has second walls (58; 258; 358; 458; 558) opposite each longitudinal slot along the longitudinal axis, each radial housing (60) being delimited by the first wall of the longitudinal slot and the opposite second wall,
- **in that** at least one of the first or second walls has the outer projection or at least one of the outer projections (57; 257; 357; 457; 557) located at the junction of the walls of each radial housing (60) with the outer face (36) of the ring, and
- **in that** at least one of the first or second walls has the inner projection or at least one of the inner projections (56; 256; 356; 456; 556) located at the junction of the walls of each radial housing (60) with the inner face (34) of the ring (32), the inner and outer projections extending into each radial housing and forming the radial retaining narrowings for the locking balls (62) in the radial housing (60).

2. The male element (2) according to the preceding claim, **characterized in that** the longitudinal slots (52; 452; 552) are provided in the second part (42).

3. The male element (2) according to any of the preceding claims, **characterized in that** each second wall (58; 358; 458; 558) is arranged in an intermediate longitudinal region of the longitudinal slot (52; 352; 452; 552).

4. The male element (2) according to any of the preceding claims, **characterized in that** the first part (40) is integral with the cylindrical extension (14).

5. The male element (2) according to any one of the preceding claims, **characterized in that** the inner (56; 256; 356; 456; 556) and outer (57; 257; 357; 457; 557) projections are provided in only one of the first part (40) and the second part (42).

6. The male element (2) according to any of the preceding claims, **characterized in that** the inner (56; 256; 356; 456; 556) and outer (57; 257; 357; 457; 557) projections are provided at the junction of the first wall (54; 254; 354; 454; 554) with the inner (34) and outer (36) faces of the ring (32).

7. The male element (2) according to any of the preceding claims, **characterized in that** the second part (42) comprises a guiding skirt (48, 502), which interacts radially with the first part (40) to ensure the radial centering of the second part (42) in relation to the first part (40).

8. The male element (2) according to the preceding claim, **characterized in that** the guiding skirt (502) comprises the proximal bearing surface (646) provided on a rear end of the guiding skirt.

9. The male element (2) according to any one of claims 1 to 7, **characterized in that** the mouth surface (44; 46) is the bearing surface (44; 46) of the one of the first or second parts (40, 42) comprising the longitudinal slots (52; 252; 352; 452; 552).

10. The male element (2) according to any one of the preceding claims, **characterized in that** the longitudinal slots (552) are oblong openings made in the second part (42) and which comprise a distal part (540) and a proximal part (560), **in that** the proximal part (560) of each longitudinal slot has a diameter (D560), at its junction with the radial outer surface (536) of the second part and/or at its junction with the radial inner surface of the second part, which is greater than the diameter (D62) of the locking balls (62), and **in that** the or at least one of the inner protrusions (556) and the or at least one of the outer protrusions (557) are formed on the distal part (540) of each longitudinal slot (552)

11. The male element (2) according to any one of the preceding claims, **characterized in that** the second part (42) comprises a wall (502) that extends axially to the rear from the proximal bearing surface (46), with the wall (502) capable of being plastically deformed on a shoulder (562) of the first part (40) so as to secure the first and second part axially.

12. The male element (2) according to any one of the preceding claims, **characterized in that** the first part (40) and the second part (42) are connected by welding, preferably by laser welding.

13. The male element (2) according to any of the preceding claims, **characterized in that** each longitudinal slot (52; 252; 352; 452 ; 552) is delimited along the longitudinal axis (X6) by a bottom formed by a cylinder part defining an inner diameter (D52) and **in that**, for each radial housing (60), the axial distance between the second wall (58; 258; 358; 458; 558) and the bottom of each longitudinal slot is equal to the inner diameter (D52) of the bottom cylinder part.

14. A fluid coupling (R), comprising a male element (2) and a female element (4) adapted to be fitted together in the longitudinal direction (X6, X-X', X64), the female element comprising a distal end (101) in which an outer annular slot (104) is provided and a locking ring (94) having a locking face (100), the locking ring is capable of moving between a locking position in which the locking face is radially aligned with the outer annular slot and holds the locking balls (62) in an inward position and an unlocking position, in which the locking face is offset from the outer annular slot (104) along the longitudinal axis (X6), each ball being free to move to the outer position within the radial housing (60), in a paired configuration of the male element with the female element, the distal end (101) being received within the annular space (38) of the male element (2) and the locking balls (62) being received within the outer annular slot (104), **characterized in that** the male element (2) is according to any of the preceding claims.

15. A method for assembling a male element (2) of a fluidic coupling (R) according to any one of claims 1 to 13, **characterized in that** the assembly method comprises at least successive steps consisting of:
a) inserting the locking balls (62) into the longitudinal slots (52; 252; 352; 452; 552) provided in one of the first or second parts (40 or 42) of the ring (32),
b) engaging the first part with the second part of the ring (32), with a second wall (58; 258; 358; 458; 558) facing each longitudinal slot along the longitudinal axis (X6), while the inner (56; 256; 356; 456; 556) and outer (57; 257; 357; 457; 557) projections are already present,
c) bringing the distal bearing surface (44; 644) into contact with the proximal bearing surface (46; 646) along the longitudinal axis (X6),
d) axially securing the first and second parts (40 and 42) of the ring (32) to each other.

16. The method for assembling according to the preceding claim, **characterized in that** in step d), the first and second parts (40 and 42) are connected to each other by welding, preferably by laser welding, or gluing.
